(19) Europäisches Patentamt
European Patent Office
Office européen des brevets

(11) **EP 1 232 609 B1**

(12) **EUROPEAN PATENT SPECIFICATION**

(45) Date of publication and mention
of the grant of the patent:
**28.11.2007 Bulletin 2007/48**

(21) Application number: **00966649.6**

(22) Date of filing: **20.09.2000**

(51) Int Cl.:
*H04L 12/56* (2006.01)    *H04Q 11/04* (2006.01)

(86) International application number:
**PCT/SE2000/001827**

(87) International publication number:
**WO 2001/028167 (19.04.2001 Gazette 2001/16)**

(54) **LINK CAPACITY SHARING FOR THROUGHPUT-BLOCKING OPTIMALITY**

OPTIMIERUNG DER DURCHSATZBLOCKIERUNG DURCH GEMEINSAME NUTZUNG DER VERBINDUNGSKAPAZITÄT

PARTAGE DE LA CAPACITE DE LIAISON EN VUE DE L'OPTIMISATION DU BLOCAGE DU DEBIT DE TRAITEMENT

(84) Designated Contracting States:
**AT BE CH CY DE DK ES FI FR GB GR IE IT LI LU MC NL PT SE**

(30) Priority: **14.10.1999 US 159351 P**
**26.04.2000 SE 0001513**

(43) Date of publication of application:
**21.08.2002 Bulletin 2002/34**

(73) Proprietor: **TELEFONAKTIEBOLAGET LM ERICSSON (publ)**
**164 83 Stockholm (SE)**

(72) Inventors:
• **FODOR, Gabor**
**SE-165 52 Hässelby (SE)**
• **TELEK, Miklos**
**H-1131 Budapest (HU)**
• **RACZ, Sándor**
**H-2700 Cegléd (HU)**

(74) Representative: **Hedman, Anders et al**
**Aros Patent AB**
**P.O. Box 1544**
**751 45 Uppsala (SE)**

(56) References cited:
**WO-A1-98/41052**          **WO-A2-97/01895**
**US-A- 5 274 644**          **US-A- 5 881 049**
**US-A- 5 909 443**          **US-A- 5 914 945**

• **G. FODOR ET AL.: 'Simulative analysis of routing and link allocation strategies in ATM networks supporting ABR services' IEIC TRANSACTIONS ON COMMUNICATIONS, INSTITUTE OF ELECTRONICS INFORMATION AND COMM. ENG. TOKYO vol. E81-B, no. 5, 01 May 1998, pages 985 - 995, ISSN: 0916-8516, XP000779504**

Description

## TECHNICAL FIELD OF THE INVENTION

The present invention generally relates to the field of communication networks, and in particular to link capacity sharing and link bandwidth allocation in such networks.

## BACKGROUND

Many communication networks of today support so-called elastic traffic such as the "best effort" services provided in Internet Protocol (IP) based networks or the Available Bit Rate (ABR) traffic in ATM networks. Elastic traffic is typically established for the transfer of a digital object, such as a data file, a Web page or a video clip for local playback, which can be transmitted at any rate up to the limit imposed by the link capacity. Web browsing on the Internet in particular is a good and representative example of elastic traffic. Here, the "elasticity" of the traffic is apparent as the user-perceived throughput (normally given in transmitted bits or bytes per time unit) when downloading for example a web page fluctuates in time depending on the overall system load.

The services delivered by IP based networks and the Internet in particular are called "best effort", because the networks generally do not provide any guarantee of the quality of service (QoS) received by the applications. The IP network only makes a best effort to provide the requested service. For instance, if an application requests the network to deliver an IP packet from one end-point to another, the network normally can not say what the delay through the network will be for that packet. In fact, the network does not even guarantee that the packet will be delivered at all.

Therefore, terminals connected to an IP network have to handle packet losses and excessive packet delay situations. Such situations occur when there are too many applications simultaneously using the network resources. These congestion situations have a non-zero probability in IP based networks, because IP networks do not exercise call admission control (CAC). In other words, IP networks do not restrict the number of simultaneously connected users, and consequently if there are too many users utilizing the network resources there will be congestion and packet losses.

However, with the advent of real-time traffic and QoS requirements in IP networks, there is a need for exercising call admission control (CAC) in order to restrict the number of connections simultaneously present in the network.

An important aspect of call or connection admission control is that new calls arriving to the network may be rejected service in order to protect in-progress calls. In general, CAC algorithms such as those commonly in use for rigid traffic in conventional ATM networks provide a basic means to control the number of users in the network, thereby ensuring that admitted users get the bandwidth necessary to provide the QoS contracted for. Consequently, a CAC algorithm represents a trade-off between the blocking probability for new calls and the provided throughput for in-progress calls. In other words, the more users that the CAC algorithm admits into the network (which reduces the blocking probability) the smaller the provided throughput per-user becomes, since a greater number of users will share the total bandwidth, and vice versa.

Recent research has indicated that it is meaningful to exercise call admission control even for elastic traffic, because CAC algorithms provide a means to prevent TCP sessions from excessive throughput degradations.

The issue of applying CAC for elastic connections, and thereby providing a minimum throughput for Transmission Control Protocol (TCP) connections in the Internet has been addressed by Massoulie and Roberts in references [1-3]. Here, bandwidth is allocated to different users according to some fairness criteria.

It has been recognized by Gibbens and Kelly in references [4-5] that there is an intimate relationship between throughput and blocking probabilities for elastic traffic, and that this trade-off is connected to the issue of charging.

It has also been shown by Feng et al. in reference [6] that providing a minimum rate guarantee for elastic services is useful, because in that case the performance of the TCP protocol can be optimized.

As the Internet evolves from a packet network supporting a single best effort service class towards an integrated infrastructure for several service classes, there is also a growing interest in devising bandwidth sharing strategies, which meet the diverse needs of peak-rate guaranteed services and elastic services.

Similarly, modem ATM networks need to support different service classes such as Constant Bit Rate (CBR) and Available Bit Rate (ABR) classes, and it is still an open question how to optimally share the link capacity among the different service classes.

In general, the issue of bandwidth sharing, in the context of dynamically arriving and departing traffic flows and especially when users have different throughput and blocking requirements, is known from the classical multi-rate circuit switched framework to be an extremely complex problem.

US Patent 5,274,644 relates to an admission scheme that enables sharing of a common resource among N traffic classes such that each class is guaranteed a contracted minimum use of the resource and can go beyond the contract whenever possible.

## SUMMARY OF THE INVENTION

The present invention overcomes these and other drawbacks of the prior art arrangements.

It is a first object of the invention to devise a link capacity/bandwidth sharing strategy that meets the diverse needs of rigid and elastic services in a mixed rigid-elastic traffic environment.

In particular, it is desirable to treat the issues of bandwidth sharing and blocking probabilities for elastic traffic in a common framework. In this respect, it is a second object of the present invention to provide a link capacity sharing mechanism that considers the throughput-to-blocking trade-off for elastic traffic. Specifically, it would be beneficial to develop and utilize a link capacity sharing algorithm that optimizes the throughput-to-blocking trade-off.

It is a further object of the invention to provide an appropriate call-level model of a transmission link carrying elastic traffic and to apply the call-level model for dimensioning the link bandwidth sharing for throughput-blocking optimality.

These and other objects are met by the invention as defined by the accompanying patent claims.

The invention concerns an efficient strategy for sharing link bandwidth in a mixed rigid-elastic traffic environment, as well as a strategy for sharing bandwidth among elastic traffic flows.

Briefly, the idea according to the invention is to share link capacity in a network by dividing the link capacity into a first common part for elastic as well as rigid (non-elastic) traffic and a second part dedicated for elastic traffic based on received network traffic inputs. Subsequently, one or more admission control parameters for the elastic traffic are determined based on the division of link capacity as well as received network traffic inputs.

The division of link capacity generally serves to share the link capacity between rigid and elastic traffic, and in particular to reserve a part of the link capacity to elastic traffic. Preferably, a minimum required capacity of the common part relating to rigid traffic is determined given a maximum allowed blocking probability for the rigid traffic. In this way, a certain grade of service (GoS) on call level is guaranteed for the rigid traffic on the link.

The admission control parameter(s) determined for elastic traffic generally serves to restrict the number of elastic traffic flows simultaneously present on the link. In particular, by formulating a call-level model for elastic traffic and determining a maximum number of admissible elastic traffic flows based on call-level constraints for the elastic traffic related to throughput and/or blocking, the throughput-to-blocking trade-off is fully considered. In this respect, the invention is capable of optimally allocating link bandwidth among elastic connections in the sense that blocking probabilities are minimized under throughput constraints, or the other way around, in the sense that the throughput is maximized under blocking constraints. In this way, the invention provides maximum link bandwidth utilization, either in terms of minimum blocking under throughput constraints or maximum throughput under blocking constraints.

Accordingly, an efficient strategy for sharing bandwidth in a mixed rigid-elastic traffic environment is provided. In particular, the bandwidth sharing algorithm guarantees a maximum blocking for rigid traffic as well as a minimum throughput and/or a maximum blocking for elastic traffic.

An important technical advantage of the invention is its ability to meet the diverse needs of rigid traffic and elastic traffic.

Another advantage of the invention is the ability to provide predictable quality of service for both the user and the network provider while at the same time ensuring high network provider revenue.

By considering only the elastic traffic of the overall traffic in a mixed rigid-elastic traffic environment, or alternatively by reducing the common bandwidth part to zero so that the entire link is reserved for elastic traffic, the overall link capacity sharing mechanism is reduced to the determination of one or more admission control parameters for elastic traffic. Admission control for requested new elastic connections can then be exercised based on such admission control parameter(s). In particular, by minimizing the blocking probabilities with respect to the number of admissible elastic connections under given throughput constraints for the elastic traffic, excessive blocking probabilities are avoided, while ensuring a given user throughput.

Another aspect of the invention concerns the application of a call-level model of a link supporting elastic traffic, for dimensioning the link bandwidth sharing for throughput-blocking optimality in an admission-control enabled IP network. In particular, an elastic traffic flow is modeled as having a bandwidth that fluctuates between a <u>minimum</u> bandwidth and peak bandwidth during the holding time of the traffic flow. Furthermore, the elastic traffic is associated with at least one of a <u>minimum</u> accepted throughput and a maximum accepted blocking probability.

A further aspect of the invention concerns a computational method for determining a Markov chain steady state distribution that is particularly advantageous for large state spaces. The Markov chain describes the dynamics of a link carrying a number of traffic classes including non-adaptive elastic traffic, and the computational method provides a good initial approximation of the steady state distribution based on Markov chain product form calculations.

Other aspects or advantages of the present invention will be appreciated upon reading of the below description of the embodiments of the invention.

## BRIEF DESCRIPTION OF THE DRAWINGS

The invention, together with further objects and advantages thereof, will be best understood by reference to the following description taken together with the accompanying drawings, in which:

Fig. 1 is a schematic diagram of a communication network according to a preferred embodiment of the invention;

Fig. 2 is a schematic flow diagram of the overall link capacity sharing algorithm applied in a mixed rigid-elastic IP traffic environment according to a preferred embodiment of the invention;

Fig. 3 is a schematic block diagram of pertinent parts of an IP router according to a preferred embodiment of the invention;

Fig. 4 is a Markov chain state space diagram for an illustrative transmission link system;

Fig. 5 is a graph illustrating the mean and the variance of the throughput of adaptive elastic flows as a function of their service time for an illustrative example of a transmission link system;

Fig. 6 is a schematic diagram illustrating the elastic cut-off parameters that fulfill given QoS requirements for an illustrative example of a link system; and

Fig. 7 is a schematic flow diagram of the overall link capacity sharing algorithm for a mixed CBR-ABR traffic environment according to a preferred embodiment of the invention.

## DETAILED DESCRIPTON OF EMBODIMENTS OF THE INVENTION

Throughout the drawings, the same reference characters will be used for corresponding or similar elements.
Throughout the disclosure, the terms *connection* and *flow* are used more or less interchangeably for what is traditionally denoted as a call.

### System overview of an illustrative communication network

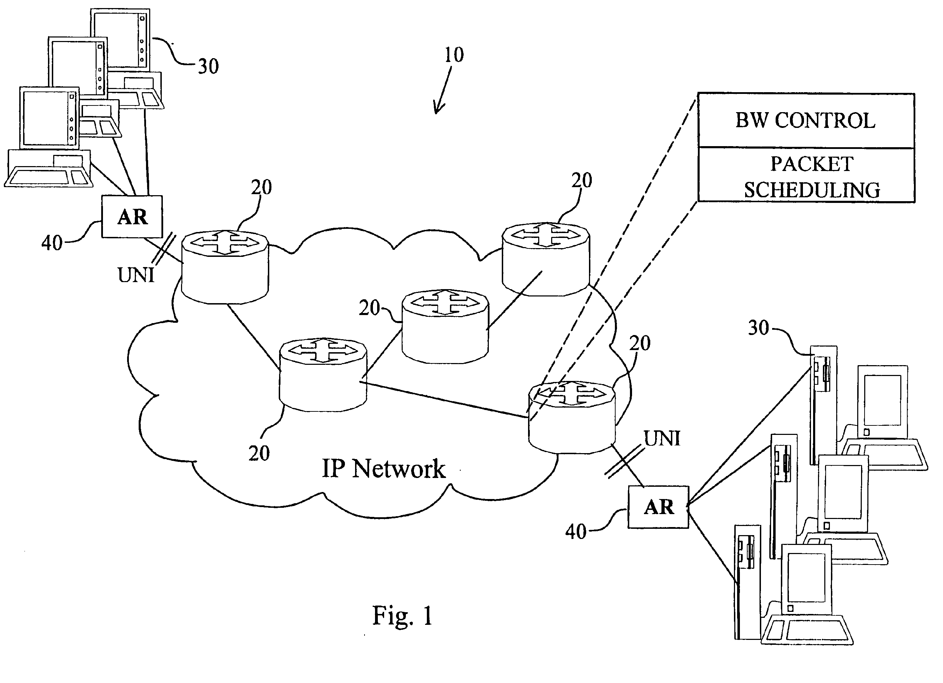

For a better understanding, a general overview of an illustrative communication network according to a preferred embodiment of the invention will now be made with reference to Fig. 1.
Fig. 1 is a schematic diagram of a communication network according to a preferred embodiment of the invention. The communication network is here illustrated as an IP based network, but may be in the form of an ATM network or any other type of network or combination of networks capable of supporting elastic traffic. The communication network 10 is based on a number of interconnected IP routers 20 (ATM switches in the case of an ATM network) forming the core network. The core network is accessed by different users 30 (computers, servers, etc.) through access points, with a so called user-network interface (UNI) being defined for the interaction between the IP routers and the user equipment. Typically, a plurality of users are connected to some form of aggregation point, such as an access router (AR) 40, which acts an intermediate between the end-users and the core network.
Link capacity sharing, also referred to as bandwidth control in the network context, and packet scheduling normally reside on the network side of the UNI, within the IP routers 20. In particular, the bandwidth control and packet scheduling are preferably implemented at the output port side of the routers 20. The overall bandwidth control has two main functions. First, the bandwidth control serves to share the bandwidth between different traffic classes. Second, the bandwidth control serves to restrict the number of simultaneously active connections within the traffic classes. The latter function is hereinafter referred to as call admission control (CAC), and is normally exercised at the input port side of the IP routers 20, where connections are accepted or rejected in accordance with some CAC algorithm. The overall bandwidth control algorithm, including the CAC algorithm, may for example be implemented as hardware, software, firmware or any suitable combination thereof.
The user-network contract (UNC) is typically defined at the UNI. The UNC usually indicates the QoS to which the user is entitled and also the specification of the traffic, which the user may inject into the network, along with supplementary data. The supplementary data may include, for example, the time of day during which the user has access to a particular service, etc. For instance, the UNC may specify that no more than 1 % of the user-injected IP packets (or ATM cells) may be lost by the network and that the user may send in 10 Mbits during any one second through the UNI.
The CAC part of the bandwidth control algorithm may use the UNC information of multiple users to provide a basic means to control the number of simultaneously present users in the network, thereby ensuring that the admitted users receive the bandwidth required to provide the contracted QoS. The CAC algorithm represents a trade-off between blocking probabilities and the provided throughput; the more users that the CAC algorithm admits into the network (which reduces the blocking probability), the smaller the provided throughput per user becomes because a greater number of users will share the network bandwidth.

CAC may be realized by means of the classical signaling exchange known for example form conventional communication circuit-switched networks. However, if the majority of the elastic flows in the network are short, such as for many TCP flows on the Internet today, the introduction of classical signaling exchange to perform admission control may result in large overheads. Therefore, an on-the-fly decision to accept or discard the first packet of a flow as suggested in reference [3] would be more beneficial. For this reason, a mechanism based for example on the existing Resource Reservation Protocol (RSVP) is provided for keeping track of the identities of currently active flows, and for classifying packets according to these identities as and when they arrive. To determine whether a flow is new or not, it is sufficient to compare its identifier with that of the flows on a special list of active flows. If no packet was received for a certain flow within a given time-out period, the flow would be removed from the list of active flows. Admission control is preferably realized by determining a maximum number of admissible flows based on the prevailing traffic situation in the system, and setting the size of the list of active flows accordingly. If the list is full, a new flow will be rejected. Otherwise, the flow will be accepted and entered into the list.

## Link capacity sharing algorithm - the IP network example

In the following, a link capacity sharing algorithm according to a preferred embodiment will be described with reference to the particular application of an IP based network carrying rigid as well as elastic traffic.

First, a proper call-level traffic model needs to be formulated. Unfortunately, the application of the classical multi-rate call-level models for management of elastic traffic, such as best effort traffic in IP networks or ABR traffic in ATM networks, is everything but straightforward. For example, it is not possible to associate elastic traffic with a constant bandwidth. Instead, the bandwidth occupied by elastic traffic flows fluctuates in time depending on the current load on the link and the scheduling and rate control algorithms applied in the network nodes. The notion of blocking, when applied to elastic traffic flows, is not as straightforward as for rigid traffic, because an arriving elastic flow might get into service even if at the arrival instant there is no bandwidth available. Besides, for many services, the actual residency time of an elastic flow depends on the throughput actually received by the elastic flow.

### Multi-class model of a transmission link for mixed rigid-elastic traffic

In the following, an example of a feasible Markovian model of a transmission link serving both peak-bandwidth assured (rigid or non-elastic) and elastic traffic classes is formulated. For simplicity and clarity, only a single rigid traffic class and two elastic traffic classes are considered. It should be noted that the model as well as the accompanying link sharing algorithm can be extended to more general cases, and of course even simpler cases.

The system under consideration comprises a transmission link of capacity C, which by way of example can be regarded as an integer number in some suitable bandwidth unit, say Mbps. In this example, calls arriving at the link generally belong to one of the following three traffic classes:

- Class 1 - *Rigid* traffic class flows, characterized by their peak bandwidth requirement $b_1$, flow arrival rate $\lambda_1$ and departure rate $\mu_1$.
- Class 2 - *Adaptive* elastic class flows, characterized by their peak bandwidth requirement $b_2$, minimum bandwidth requirement $b_2^{min}$, flow arrival rate $\lambda_2$ and departure rate $\mu_2$. Although the bandwidth occupied by adaptive elastic flows may fluctuate as a function of the link load, their actual holding time is not influenced by the received throughput throughout their residency in the system. This is the case for instance with an adaptive video codec, which, in case of throughput degradation decreases the quality of the video images and thereby occupies less bandwidth.
- Class 3 - *Non-adaptive* elastic class flows, characterized by their peak bandwidth requirement $b_3$, minimum bandwidth requirement $b_3^{min}$, flow arrival rate $\lambda_3$ and ideal departure rate $\mu_3$. The ideal departure rate is experienced when the peak bandwidth is available. The real instantaneous departure rate is proportional to the bandwidth of the flows.

We denote the actual bandwidth allocated (reserved) to a flow of class-2 and class-3 in a given system state with $b_2^r$ and $b_3^r$, both of which vary in time as flows arrive and depart. We will also use the quantity $r_{min} = b_i^{min} / b_i$ (for i=2 or i=3) associated with elastic flows with minimum bandwidth requirements.

One may think of a non-adaptive elastic class flow as one that upon arrival has an associated amount of data to transmit (W) sampled from an exponentially distributed

service requirement, with distribution $G(x) = 1 - e^{-\frac{b_3}{\mu_3}x}$, which in the case when the peak bandwidth $b_3$ is available during the entire duration of the flow gives rise to an exponentially distributed service time with mean $1/\mu_3$. Since the free capacity of the link fluctuates in time according to the instantaneous number of flows in service, the bandwidth given to the non-adaptive elastic flows may drop below the peak bandwidth requirement, in which case the actual holding time of the flow increases.

All three types of flows arrive according to independent Poisson processes, and the holding time for the rigid and adaptive flows are exponentially distributed. As we will see, the moments of the holding time of the non-adaptive flows can be determined using the theory of Markov reward processes. In short, two types of elastic traffic are considered. Elastic traffic is associated with both a peak and a <u>minimum</u> bandwidth requirement, and allowed into service only as long as the <u>minimum</u> bandwidth requirement is fulfilled. The two elastic traffic classes primarily differ in terms of how their residency time depends on the acquired throughput.

To ensure a given QoS of the different elastic classes (that, in general, differ in their peak and minimum bandwidth, i.e. $b_2 \neq b_3$, $b_2^{min} \neq b_3^{min}$) we need to establish some policy, which generally governs the bandwidth sharing among the different elastic classes. For this reason, we define the following general bandwidth sharing rules between the elastic classes. The following presentation concerns only two elastic classes, but it extends naturally to more than two elastic classes.

- If there is enough bandwidth for all flows to get their respective peak bandwidth demands, then class-2 and class-3 flows occupy $b_2$ and $b_3$ bandwidth units, respectively.

- If there is a need for bandwidth compression, i.e. $n_1 \cdot b_1 + n_2 \cdot b_2 + n_3 \cdot b_3 > C$, then the bandwidth compression of the elastic flows is such that $r_2 = r_3$, where $r_2 = b_2^r/b_2$ and, $r_3 = b_3^r/b_3$, as long as the <u>minimum</u> rate constraint is met for both elastic classes (i.e. $b_2^{min}/b_2 \leq r_2 \leq 1$ and $b_3^{min}/b_3 \leq r_3 \leq 1$).

- If there is still need for further bandwidth compression, but either one of the two elastic classes does not tolerate further bandwidth decrease (i.e. $r_i$ is already $b_i^{min}/b_i$ for either $i = 2$ or $i = 3$) at the time of the arrival of a new flow, then the service class which tolerates further compression decreases equally the bandwidth occupied by its flows, as long as the minimum bandwidth constraint is kept for this traffic class.

Three underlying assumptions of the above exemplary model are noteworthy. First of all, it is assumed that both types of elastic flows are greedy, in the sense that they always occupy the maximum possible bandwidth on the link, which is the smaller of their peak bandwidth requirement ($b_2$ and $b_3$, respectively) and the equal share (in the above sense) of the bandwidth left for elastic flows by the rigid flows (which will depend on the link allocation policy used). Second, it is assumed that all elastic flows in progress share proportionally equally (i.e. the $r_i$'s are equal) the available bandwidth among themselves, i.e. the newly arrived elastic flow and the in-progress elastic flows will be squeezed to the same $r_i$ value. This assumption, as we will see, provides a quite "fair" resource sharing among the elastic flows. To have different elastic traffic classes with significantly different QoS this assumption needs to be modified. If a newly arriving flow decreased the elastic flow bandwidth below $b_2^{min}$ and $b_3^{min}$ (i.e. both elastic classes are compressed to their respective minima), that flow is not admitted into the system, but it is blocked and lost. Arriving rigid as well as elastic flows are allowed to "compress" the in-service elastic flows, as long as the minimum bandwidth constraints are kept. As a third point, the model assumes that the rate control of the elastic flows in progress is ideal, in the sense that an infinitesimal amount of time after any system state change (i.e. flow arrival and departure) the elastic traffic sources readjust their current bandwidth on the link. While this is clearly an idealizing assumption, the buffers at the IP packet layer could be made large enough to absorb the IP packets until TCP throttles the senders. The fact that the model assumes immediate source rate increase whenever possible make the forthcoming throughput and blocking calculations conservative rather than optimistic.

It is intuitively clear that the residency time of the non-adaptive elastic flows in this system depends not only on the amount of data they want to transmit, but also on the bandwidth they receive during their holding times, and vice versa, the amount of data transmitted through an adaptive elastic flow depends on the received bandwidth. In order to specify this relationship we define the following quantities:

- $\theta_2(t)$ and $\theta_3(t)$ defines the instantaneous throughput of adaptive and non-adaptive flows, respectively, at time t. For example, if there are $n_1$, $n_2$ and $n_3$ rigid, adaptive, and non-adaptive flows, respectively, in the system at time t, the instantaneous throughputs for adaptive and non-adaptive flows are $\min(b_2, (C-n_1b_1- n_3r_3b_3)/n_2)$ and $\min(b_3, (C-n_1b_1 - n_2r_2b_2)/n_3)$, respectively. Note that $\theta_2(t)$ and $\theta_3(t)$ are discrete random variables for any $t \geq 0$.

- $\tilde{\theta}_t = \dfrac{1}{t} \displaystyle\int_0^t \theta_2(\tau)d\tau$ defines the throughput of an adaptive flow having a holding time equal to t.

- $\tilde{\theta} = \displaystyle\int_0^\infty \tilde{\theta}_\tau dF(\tau) = \mu_2 \int_0^\infty \tilde{\theta}_\tau e^{-\mu_2\tau} d\tau$ (random variable) defines the throughput of an adaptive flow, where $F(t)$ is the exponentially distributed holding time.

- $T_x = \inf\left\{ t \Big| \displaystyle\int_0^t \theta_3(\tau)d\tau \geq x \right\}$ (random variable) gives the time it takes for the system to transmit x amount of data through an elastic non-adaptive flow.

- $\hat{\theta}_x = x/T_x$ defines the throughput of an non-adaptive flow during the transmission of x data units. Note that $\theta_x$ is a continuous random variable.

- $\hat{\theta} = \displaystyle\int_0^\infty \hat{\theta}_x dG(x) = \mu_3/b_3 \int_0^\infty \hat{\theta}_x e^{-x\mu_3/b_3} dx$ (random variable) defines the throughput of an non-adaptive flow, where the amount of transmitted data is exponentially distributed with parameter $\mu_3/b_3$.

Although a number of general bandwidth sharing rules have been defined above, a more specific link capacity sharing policy, especially one that considers the diverse requirements of rigid and elastic traffic, still needs to be presented.

*Link capacity sharing algorithm*

According to the invention, the Partial Overlap (POL) link allocation policy, known from reference [7] describing the POL policy for simulative analysis in the classical multi-rate circuit switched framework, is adopted and modified for a traffic environment that includes elastic traffic. According to the new so-called elastic POL policy, the link capacity C is divided into two parts, a common part $C_{COM}$ for rigid as well as elastic traffic and a dedicated part $C_{ELA}$, which is reserved for the elastic flows only, such that $C = C_{COM} + C_{ELA}$.

Furthermore, admission control parameters, one for each elastic traffic class present in the system, are introduced into the new elastic POL policy. In this particular example, $N_{EL2}$ denotes the admission control parameter for adaptive elastic flows and $N_{EL3}$ denotes the admission control parameter for non-adaptive elastic flows. Each admission control parameter stands for the maximum number of admissible flows of the corresponding elastic traffic class. The admission control parameters are also referred to as cut-off parameters, since as long as the maximum number of simultaneous elastic flows of a certain class are present on the link, new elastic flows will be rejected; a form of cut-off.

Under the considered elastic POL policy, the number $(n_1, n_2, n_3)$ of flows in progress on the link is subject to the following constraints:

$$n_1 \cdot b_1 \leq C_{COM} \qquad\qquad (1)$$

$$N_{EL2} \cdot b_2^{min} + N_{EL3} \cdot b_3^{min} \leq C_{ELA} \qquad\qquad (2)$$

$$n_2 \leq N_{EL2} \qquad\qquad (3)$$

$$n_3 \leq N_{EL3} \qquad\qquad (4)$$

In (1) the elastic flows are protected from rigid flows. In (2-4) the maximum number of elastic flows is limited by three constraints. Expression (2) protects rigid flows from elastic flows, while (3-4) protect the in-progress elastic flows from arriving elastic flows. The new elastic POL policy is fully determined by the division of the link capacity, specified by $C_{COM}$, and the admission control parameters $N_{EL2}$, $N_{EL3}$. These parameters are referred to as the *output parameters* of the system. The performance of the elastic POL policy can be tuned by the output parameters, and in particular, it has been realized that the setting of the output parameters $C_{COM}$, $N_{EL2}$ and $N_{EL3}$, allows for a tuning of the throughput-to-blocking trade-off for the elastic traffic classes.

With respect to the throughput-to-blocking trade-off for elastic traffic, the invention is generally directed towards the provision of a high link bandwidth utilization under one or more call-level constraints that are related to at least one of elastic throughput and elastic blocking probability.

According to a preferred embodiment of the invention, the link capacity sharing algorithm aims at setting the output parameters of the elastic POL policy in such a way as to minimize call blocking probabilities $B_2$ and $B_3$ for elastic flows, while being able to take into account a blocking probability constraint (GoS) for the rigid flows as well as minimum throughput constraints for the elastic flows. The throughput constraints for the elastic flows are introduced because it has been recognized that there is a minimum acceptable throughput below which the users gain no actual positive utility.

Therefore, the rigid traffic class is associated with a maximum accepted call blocking probability $B_1^{max}$, and the elastic adaptive and elastic non-adaptive traffic classes are associated with minimum accepted throughputs $\hat{\theta}_{min}$ and $\tilde{\theta}_{min}$, respectively. Preferably, the throughput constraints are formed as constraints on the probability that the user-perceived throughput during transfer of certain amount of data drops below a given threshold. Such a performance measure is easier for the user to verify than the traditional fairness criteria discussed in references [1-3].

Although the blocking probabilities for elastic traffic are being minimized, it is nevertheless normally advisable, although not necessary, to have a worst-case guarantee of the call blocking for elastic traffic, and associate also the two elastic traffic classes with maximum allowed blocking probabilities $B_2^{max}$ and $B_3^{max}$.

In this case, the traffic input parameters of the system are the set of arrival rates ($\lambda_1$, $\lambda_2$, $\lambda_3$) and departure rates ($\mu_1$, $\mu_2$, $\mu_3$) obtained from the network, the bandwidths ($b_1$, $b_2$, $b_3$), the minimum elastic bandwidth demands ($b_2^{min}$, $b_3^{min}$), the blocking probability constraints ($B_1^{max}$ or the whole set of $B_1^{max}$, $B_2^{max}$ and $B_3^{max}$) and the elastic throughput constraints ($\tilde{\theta}_{min}$ and $\hat{\theta}_{min}$). The departure rate for non-adaptive class can be estimated under the assumption that the bandwidth of the non-adaptive flows equals $b_3$.

The parameters and performance measures associated with the rigid traffic class and the two elastic traffic classes are summarized in Table I below.

**EP 1 232 609 B1**

Table I

| Class ⇓ | Input parameters | | | | | | Performance measures | | System state |
|---|---|---|---|---|---|---|---|---|---|
| | Call arrival rate | Departure rate | Peak bandwidth requirement | Minimum bandwidth requirement | Maximum accepted blocking probability | Minimum accepted throughout | Blocking | Throughput | Number of flows in the system |
| Rigid | $\lambda_1$ | $\mu_1$ | $b_1$ | - | $B_1^{max}$ | - | $B_1$ | - | $n_1$ |
| Adaptive elastic | $\lambda_2$ | $\mu_2$ | $b_2$ | $b_2\,min$ | $(B_2^{max})$ | $\tilde{\theta}_{min}$ | $B_2$ | $\tilde{\theta}$ | $n_2$ |
| Non-adaptive elastic | $\lambda_3$ | $\mu_3$ | $b_3$ | $b_3\,min$ | $(B_3^{max})$ | $\hat{\theta}_{min}$ | $B_3$ | $\hat{\theta}$ | $n_3$ |

9

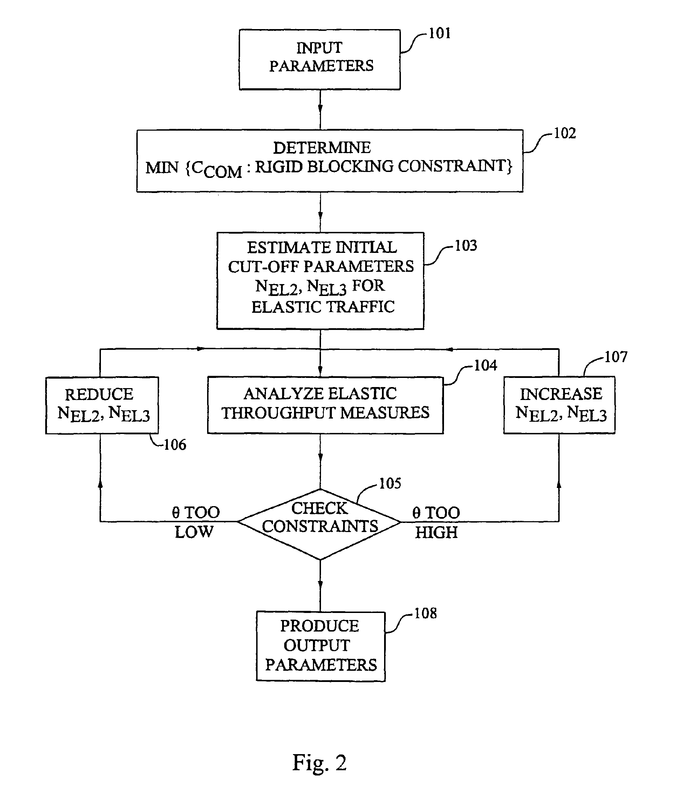

The problem of determining the output parameters of the elastic POL policy under blocking and throughput constraints is outlined below with reference to Fig. 2, which is a schematic flow diagram of the overall link capacity sharing algorithm according to a preferred embodiment of the invention. In the first step 101, the required input parameters, such as current arrival and departure rates, bandwidth requirements as well as the constraints imposed on the traffic, are provided. In step 102, the GoS (call blocking) requirement for rigid traffic is guaranteed by the proper setting of $C_{COM}$. In particular, we determine the minimum required capacity of $C_{COM}$ for rigid flows that guarantees the required blocking probability $B_1^{max}$:

$$\min\{C_{COM}: B_1 \leq B_1^{max}\} \qquad\qquad (5)$$

where $B_1$ is the blocking probability of rigid flows. For example, the well-known Erlang-B formula can be used to estimate such a value of $C_{COM}$ based on arrival and departure rates and peak bandwidth requirement for the rigid traffic as inputs. In addition, a maximum number $N_{COM}$ of admissible rigid flows can be determined based on the Erlang-B analysis and used for admission control of the rigid traffic.

Next, we have to determine a maximum number of elastic flows ($N_{EL2}$, $N_{EL3}$) that can be simultaneously present in the system at the same time as the required throughput and blocking requirements are fulfilled. It is intuitively clear that if the maximum number $N_{EL2}$ of adaptive elastic flows is increased, the blocking probability $B_2$ of adaptive elastic flows decreases and the throughput decreases as well. Unfortunately, changing $N_{EL2}$ affects both the blocking probability $B_3$ and throughput of non-adaptive elastic flows and vice-versa.

In this particular embodiment, the link capacity sharing algorithm aims at minimizing the blocking probabilities of the elastic traffic classes under throughput-threshold constraints. To accomplish this, the invention proposes an iterative procedure, generally defined by steps 103-107, for tuning the cut-off parameters so that the throughput-threshold constraints are just fulfilled, no more and no less. First, in step 103, initial values of the cut-off parameters are estimated. Next, the performance of the system is analyzed (step 104) with respect to elastic throughputs. In particular, the throughputs $\tilde{\theta}$ and $\hat{\theta}$ offered in the system controlled by the initial values of the cut-off parameters are analyzed (step 104) and related (step 105) to the throughput-threshold constraints $\tilde{\theta}_{min}$ and $\hat{\theta}_{min}$. If the offered throughputs are too low, then the cut-off parameters are reduced (step 106), increasing the blocking probabilities and also increasing the throughputs. On the other hand, if the offered throughputs are higher than the throughput-thresholds, then the cut-off parameters can be increased (step 107) so that the blocking probabilities (as well as the throughputs) are reduced. In this way, by iteratively repeating the steps 104, 105 and 106/107, the blocking probabilities can be reduced to a minimum, while still adhering to the throughput constraints. Once the constraints are fulfilled to a satisfactory degree, the algorithm outputs (step 108) the parameters $C_{COM}$, ($C_{ELA}$, ($N_{COM}$), $N_{EL2}$, $N_{EL3}$ for use in controlling the actual bandwidth sharing of the considered transmission link.

Naturally, the steps 101 to 108 are repeated in response to changing traffic conditions so as to flexibly adapt the bandwidth sharing to the prevailing traffic situation.

In general, the cut-off parameters have to be reduced to fulfill the throughput constraints. On the other hand, as the aim is to minimize the elastic blocking probabilities, and as it is advisable to have a worst-case guarantee of the blocking probabilities for elastic traffic, the cut-off parameters must at the same time be as high as possible, and at least high enough to fulfill the worst-case blocking constraints. Depending on the model parameters and the given bounds, it may be the case that all the constraints can not be satisfied at the same time, which means that the link is overloaded with respect to the GoS requirements.

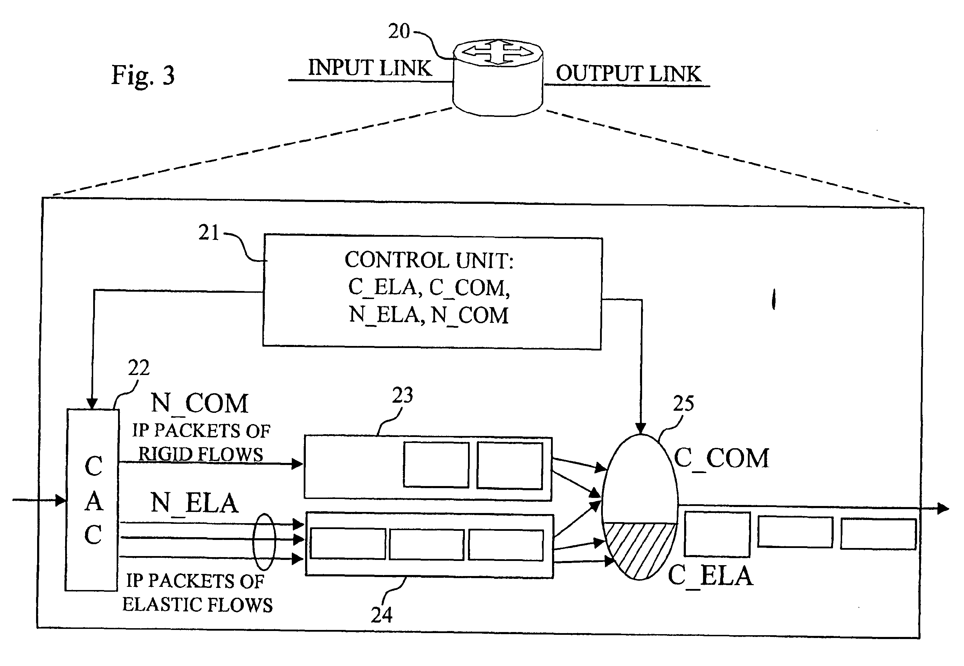

Fig. 3 is a schematic block diagram of pertinent parts of an IP router (or an ATM switch) in which a link capacity sharing algorithm according to the invention is implemented. The IP router 20 is associated with an input link and an output link. The router 20 has a control unit 21, a CAC unit 22, an output port buffer 23 for rigid traffic, an output port buffer 24 for elastic traffic, and an output port scheduler 25.

The control unit 21 is preferably, although not necessarily, realized as software running on a computer system. The software may be written in almost any type of computer language, such as C, C + + , Java or even specialized proprietary languages. In effect, the link capacity algorithm is mapped into a software program, which when executed on the computer system produces a set of output control parameters C_ELA, C_COM, N_ELA, N_COM in response to appropriate traffic input parameters received from the network and the UNCs by conventional means.

The N_ELA, N_COM parameters represents the cut-off parameters for rigid traffic and elastic traffic, respectively. In the example of Fig. 3, only a single elastic traffic class is considered, and hence only a single cut-off parameter N_ELA for elastic traffic is produced by the control unit 21. The cut-off parameters are forwarded to the CAC unit 22, which accepts or rejects new flows based on the forwarded cut-off parameters. For each requested new flow, the traffic class of the flow is determined so that admission control can be exercised based on the relevant cut-off parameter. IP packets belonging to accepted rigid flows (restricted by N_COM) are forwarded to the output port buffer 23 for subsequent scheduling by the output port scheduler 25. In the same way, IP packets belonging to accepted elastic flows (restricted by N_ELA) are forwarded to the output port buffer 24.

The C_ELA, C_COM parameters are forwarded from the control unit 21 to the output port scheduler 25. The output port scheduler 25 represents the bandwidth of the output link, and the actual bandwidth representation used in the traffic scheduling is determined by the C_ELA, C_COM parameters. In the output port scheduler 25, the bandwidth of the output link is divided into a common part C_COM, and a dedicated part C_ELA reserved for elastic traffic only. In scheduling IP packets, the output port scheduler 25 can use only the common bandwidth part C_COM for IP packets from the output port buffer 23 for rigid flows. For IP packets from the output port buffer 24 for elastic flows on the other hand, the scheduler 25 can use both the dedicated bandwidth part C_ELA and the common bandwidth part C_COM. In this way, the output port output port scheduler 25 decides how many IP packets that can be sent on the output link per time unit and traffic class.

*Analysis of throughput and blocking probability measures of elastic flows*

The throughput constraints used in the evaluation step 105 (Fig. 2) may for example be constraints on the average throughput, where the cut-off parameters fulfills the throughput constraints if:

$$E(\widetilde{\theta}) \geq \widetilde{\theta}_{min}, \ \ E(\hat{\theta}) \geq \hat{\theta}_{min} \tag{6}$$

where E stands for the expected value. To make a plausible interpretation of this type of constraints, let us assume that the distribution of $\theta$ is fairly symmetric around $E(\theta)$. In other words, the median of $\theta$ is close to $E(\theta)$. In this case, the probability that an elastic flow obtains less bandwidth than $\theta^{min}$ is around 0.5.

However, users often prefers more informative throughput constraints, and an alternative constraint may require that the throughput of adaptive and non-adaptive flows are greater than $\widetilde{\theta}_{min}$ and $\hat{\theta}_{min}$ with predetermined probabilities $(1-\varepsilon_2)$ and $(1-\varepsilon_3)$, respectively, independent of the associated service requirements (x) or holding times (t):

$$\Pr(\widetilde{\theta}_t \geq \widetilde{\theta}_{min}) \geq (1-\varepsilon_2), \ \ \Pr(\hat{\theta}_x \geq \hat{\theta}_{min}) \geq (1-\varepsilon_3) \tag{7}$$

The worst-case constraints on the elastic blocking probabilities can simply be expressed as:

$$B_2 \leq B_2^{max}, \ \ B_3 \leq B_3^{max} \tag{8}$$

In order to obtain the elastic throughput measures (step 104) and possibly also the elastic blocking measures for given values of the cut-off parameters so as to enable evaluation (step 105) against the given constraints, the steady state distribution of a Markov chain describing the dynamics of the mixed rigid-elastic traffic needs to be determined. As implied in connection with the formulation of the multi-class model above, the system under investigation can be represented as a Continuous Time Markov Chain (CTMC), the state of which is uniquely characterized by the number of flows of the different traffic classes ($n_1$, $n_2$, $n_3$). It is clear that in order to obtain the performance measures of the system we have to determine the CTMC's generator matrix Q and its steady state distribution $\underline{P} = \{P_i\}$, where $\underline{P}^T \cdot Q = \underline{O}$ and $\Sigma_i P_i = 1$. The notions of a generator matrix and a steady state distribution of a Markov chain are considered well known to the skilled person. For a general introduction to loss networks, Markov theory and the general stochastic knapsack problem, reference is made to [8], and especially pages 1-69 thereof. For given values of the parameters $C_{COM}$, $N_{EL2}$, $N_{EL3}$, the set of triples ($n_1$, $n_2$, $n_3$) that satisfies the constraints of the elastic POL policy given by (1-4) constitute the set of feasible states of the system denoted by S. The cardinality of the state space can be determined as:

$$\#S = \left(\frac{C_{COM}}{b_1} + 1\right) \cdot (N_{EL2} + 1) \cdot (N_{EL3} + 1) \tag{9}$$

It is easy to realize that the generator matrix Q possesses a nice structure, because only transitions between "neighboring states" are allowed in the following sense. Let $q_{i,j}$ denote the transition rate from state i to state j. Then, taking into account the constraints (1-4) on the number of flows in the system defined by the elastic POL policy, the non-zero transition rates between the states are:

$$q_{i,ik+} = \lambda_k \qquad k = 1, 2, 3 \qquad (10)$$

$$q_{i,ik-} = n_k \cdot \mu_k \qquad k = 1, 2 \qquad (11)$$

$$q_{i,i3-} = n_3 \cdot r_3 \cdot \mu_3 \qquad (12)$$

where $i_{1+} = (n_1 + 1, n_2, n_3)$ when $i = (n_1, n_2, n_3)$; $i_{k+}$ and $i_{k-}$ (k = 1, 2, 3) are defined similarly. Expression (10) represents the state transitions due to a call arrival, while (11) and (12) represent transitions due to call departures. The quantity defined in (12) denotes the total bandwidth of the non-adaptive flows when the system is in state i. The generator matrix Q of the CTMC is constructed based on the transition rates defined in (10-12).

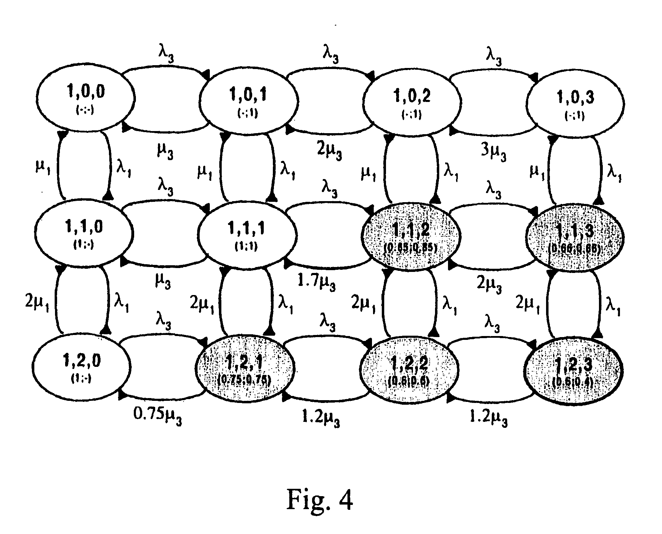

For illustrative purposes, let us consider a small system with a rigid class, an adaptive elastic class and a non-adaptive elastic class, where the link capacity C=7. For simplicity, assume a division of the link capacity such that $n_1 = 1$ is kept fixed, i.e. the available bandwidth for elastic flows is 6 bandwidth units. Furthermore, $b_1 = 1$, $b_2 = 3$ and $b_3 = 2$. The elastic flows are characterized by their minimum accepted bandwidths, which here are set to $b_2^{min}=1.8$ and $b_3^{min}=0.8$. Setting the cut-off parameters to $N_{EL2}=2$ and $N_{EL3}=3$, gives rise to 12 feasible states as illustrated in the Markov chain state space diagram of Fig. 4. There are 5 (gray) states where at least one of the elastic flows is compressed below the peak bandwidth specified by $b_2$ and $b_3$. The states are identified by the number of active connections ($n_1$, $n_2$, $n_3$). The values below the state identifiers indicate the bandwidth compression of the adaptive and non-adaptive elastic traffic ($r_2$, $r_3$). The state (1, 2, 3) is the only one where the bandwidth compression of the adaptive class and the non-adaptive class differs due to different minimum bandwidth requirements ($r_2^{min}=0.6$, $r_3^{min}=0.4$).

Different numerical solutions can be used to obtain the steady state distribution of a so-called multidimensional Markov chain. Direct methods such as the Gaussian elimination method compute the solution in a fixed number of operations. However, when considering the size of the state space for practically interesting cases, i.e. large state spaces in the order of $10^4$ or higher, the computational complexity of the direct methods is usually unacceptable. Therefore, an iterative method, such as the biconjugate gradient method applied here, is much more feasible for the steady state analysis. The biconjugate gradient method is also detailed in reference [9].

The computation time of an iterative method depends on factors such as the speed of convergence and the complexity of each iteration step. The computation time is also highly dependent on the initial guess. A good initial guess will significantly reduce the overall computation time. For this reason, according to the invention, a heuristic direct method is applied for calculating a fairly close initial guess to be applied in the iterative method. Some special multidimensional Markov chains exhibit a so called product form solution, which means that the steady state probability of state (i,j) can be efficiently determined in product form as f(i)·g(j) instead of h(i,j). Unfortunately, due to the occasional reduction of the bandwidth (and corresponding departure rate) of the non-adaptive elastic flows, the CTMC of the studied system does not exhibit the nice properties of reversibility and product form solution, but the proposed initial guess used for the subsequent iterative numerical procedure is calculated as if the Markov chain exhibited product form. In other words, the initial form of the steady state distribution of a Markov chain describing a traffic system that includes non-adaptive elastic traffic is determined based on Markov chain product form calculations, and applied in an iterative steady state analysis method.

The fact that only non-adaptive elastic flows disturb the reversibility is utilized, and the Markov chain that describes the number of rigid and adaptive elastic flows in the system is reversible, and

$$p(n_1,n_2) = \sum_{i=0}^{N_{EL3}} p(n_1,n_2,i), \forall (n_1,n_2) \in S \text{ is obtained from:}$$

$$p^*(0,0) = 1 \qquad (13)$$

$$p^*(n_1,n_2) = p^*(n_1-1,n_2) \cdot \frac{\lambda_1}{n_1 \cdot \mu_1} = p^*(n_1,n_2-1) \cdot \frac{\lambda_2}{n_2 \cdot \mu_2} \qquad (14)$$

$$p(n_1,n_2) = \frac{p^*(n_1,n_2)}{\sum_{(a,b)\in S} p^*(a,b)} \qquad (15)$$

where the $p^*(n_1,n_2)$ unnormalized steady state probabilities are auxiliary variables of the iterative method. From the steady state distribution of the rigid and adaptive flows ($p(n_1,n_2)$), the overall steady state behavior ($p(n_1,n_2,n_3)$) is obtained by fixing the number of rigid flows ($n_1 = i$) and assuming that the obtained Markov chain is reversible, even though this is not the case. This assumption allows us to evaluate an initial guess for the iterative method as follows. For all possible fixed values of $n_1$ ($n_1 = i$):

$$p^*(i,0,0) = 1 \qquad (16)$$

$$p^*(i,n_2,n_3) = \frac{p^*(i,n_2-1,n_3) \cdot \lambda_2 + p^*(i,n_2,n_3-1) \cdot \lambda_3}{n_2 \cdot \mu_2 + n_3 \cdot \mu_3 \cdot r_3} \qquad (17)$$

$$p(i,n_1,n_2) = p^*(i,n_1,n_2) \frac{\sum_{a \in S} p^*(i,a)}{\sum_{(a,b)\in S} p^*(i,a,b)} \qquad (18)$$

In other words, we group states with common $n_1$, $n_2$ parameters, summing up their probabilities, to obtain a new 2-dimensional Markov chain. The obtained 2-dimensional Markov chain exhibits product form, and its steady state distribution is calculated using equations (13-15). Next, we "share" the probability of the state groups among the individual states that define a state group using equations (16-18).

The steady state distribution of traffic classes other than the non-adaptive traffic class is calculated as if there was no non-adaptive traffic in the system, and then state probabilities are calculated under the assumption of equilibrium between incoming and outgoing traffic of one of the other traffic classes and the non-adaptive elastic traffic class. In the present example, the steady state distribution of the rigid traffic class and the adaptive elastic traffic class is calculated as if there was no non-adaptive elastic traffic in the system, and state probabilities are determined assuming that the incoming and outgoing adaptive and non-adaptive elastic traffic are in equilibrium. It should though be understood that equations (13-18) can be adapted to a variety of applications, for example traffic systems with several rigid traffic classes but only a single elastic traffic class.

It should also be understood that the above procedure for calculating an initial approximation of a steady state distribution is generally applicable to any multi-dimensional Markov chain and can be adapted to different applications.

The obtained initial approximation of the steady state distribution is used as a good initial guess for an iterative method, such as the biconjugate gradient based method, which improves the initial guess step-by-step to an appropriate accuracy.

Based on the steady state distribution of the CTMC, the call blocking probabilities can be calculated as:

$$B_k = \sum_{i \in S, ik+\notin S} p_i , \quad k = 1, 2, 3 \qquad (19)$$

The calculation of the average throughput of the adaptive and non-adaptive elastic flows is also quite straightforward once the steady state distribution of the CTMC is determined:

$$E(\tilde{\theta}) = \frac{\sum\limits_{(n_1,n_2,n_3)\in S} n_2\, p(n_1,n_2,n_3)\, b_2\, r_2(n_1,n_2,n_3)}{\sum\limits_{(n_1,n_2,n_3)\in S} n_2\, p(n_1,n_2,n_3)} \qquad (20)$$

$$E(\hat{\theta}) = \frac{\sum\limits_{(n_1,n_2,n_3)\in S} n_3\, p(n_1,n_2,n_3)\, b_3\, r_3(n_1,n_2,n_3)}{\sum\limits_{(n_1,n_2,n_3)\in S} n_3\, p(n_1,n_2,n_3)} \qquad (21)$$

Thus, the blocking probability constraints in (5) and (8) as well as the average throughout constraints in (6) can be evaluated.

Unfortunately, it is much harder to check the throughput threshold constraints in (7), since neither the distribution nor the higher moments of $\tilde{\theta}_t$ and $\hat{\theta}_x$ can be analyzed based on the steady state distribution of the above studied Markov chain. Hence, a new analysis approach is applied. The throughput threshold constraint on adaptive elastic flows can be checked based on the distribution of $\tilde{\theta}_t$ and the throughput threshold constraint on non-adaptive elastic flows can be checked based on the distribution of $T_x$, because:

$$Pr(\hat{\theta}_x \geq \hat{\theta}_{min}) = Pr(x/T_x \geq \hat{\theta}_{min}) = Pr(T_x \leq x/\hat{\theta}_{min}) \qquad (22)$$

Since it is computationally to hard to evaluate the distribution of $T_x$ and $\tilde{\theta}_t$ for realistic models, but there are effective numerical methods to obtain their moments, we check the throughput threshold constraint by applying a moment based distribution estimation method as disclosed in reference [10] and summarized in Table II below. In Table II, $\mu_n$ denotes the nth moment of the random variable X and the formulas present an upper and lower bound on the distribution of X. Table II is valid for any non-negative random variable, i.e. we do not utilize the fact that $T_x$ and $\tilde{\theta}_t$ are upper bounded in our system.

Table II

| | $Pr(X \geq 1) \leq$ upper limit | $Pr(X \geq 1) \leq$ upper limit |
|---|---|---|
| 1 | $\mu_1$ | 0 |
| 2 | $\dfrac{\mu_2 - \mu_1^2}{\mu_2 - 2\mu_1 + 1},\, (\mu_1 \leq 1)$ | $\dfrac{(\mu_1 - 1)^2}{\mu_2 - 2\mu_1 + 1},\, (\mu_1 \geq 1)$ |
| 3 | $\dfrac{\mu_3\mu_1 - \mu_2^2 + \mu_2\mu_1 - \mu_1^2}{\mu_3 - \mu_2},\, \left(\dfrac{\mu_2 - \mu_3}{\mu_1 - \mu_2} \geq 1\right)$ $\dfrac{\mu_3\mu_1 - \mu_2^2}{\mu_3 - 2\mu_2 + \mu_1},\, \left(\dfrac{\mu_2 - \mu_3}{\mu_1 - \mu_2} < 1\right)$ | $\dfrac{(\mu_2 - \mu_1)^3}{(\mu_3 - 2\mu_2 + \mu_1)(\mu_3 - \mu_2)},\, \left(\dfrac{\mu_2 - \mu_3}{\mu_1 - \mu_2} \geq 1\right)$ |

The method to evaluate the moments of $T_x$ and $\tilde{\theta}_t$ is based on a tagging an elastic flow arriving to the system, and carefully examining the possible transitions from the instance this tagged flow enters the system until it leaves the system. The system behavior during the service of the tagged flow can be described by a slightly modified Markov chain. To analyze $\tilde{\theta}_t$ a tagged adaptive elastic flow is considered, while to analyze $T_x$ a tagged non-adaptive elastic flow is considered. The modified system used to evaluate $\tilde{\theta}_t$ (or $T_x$) has the following properties:

- Since it is assumed that at least the tagged elastic flow is present in the system we exclude states where $n_2 = 0$ (or $n_3 = 0$).

- With each state of the state space there is an associated entrance probability, which is the probability of the event that the modified CTMC starts from that state. When the tagged elastic flow finds the system in state $(n_1,n_2,n_3)$ it will bring the system into state $(n_1,n_2+1,n_3)$ (or state $(n_1,n_2,n_3-1)$) unless the state $(n_1,n_2,n_3)$ happens to be a blocking state of the tagged flow.

Let $\{Z(t), t \geq 0\}$ be the modified CTMC assuming the tagged elastic flow never leaves the system over the finite state space $F$ with generator B. $F$ can be defined as:

$$0 \;\leq\; n_1 \cdot b_1 \leq C_{COM} \tag{23}$$

$$1 \text{ (or 0)} \;\leq\; n_2 \;\leq\; N_{EL2} \tag{24}$$

$$0 \text{ (or 1)} \;\leq\; n_3 \;\leq\; N_{EL3} \tag{25}$$

Indeed, $F=S\backslash S_0$ where So is the states in S where $n_2 = 0$ (or $n_3 = 0$). The state transition rates in B are closely related to the appropriate rates in Q:

$$b_{i,ik+} \;=\; \lambda_k \qquad k = 1, 2, 3 \tag{26}$$

$$b_{i,i1-} \;=\; n_1 \cdot \mu_1 \tag{27}$$

$$b_{i,i2-} \;=\; (n_2-1) \cdot \mu_2 \quad (\text{or } n_2 \cdot \mu_2) \tag{28}$$

$$b_{i,i3-} \;=\; n_3 \cdot r_3 \cdot \mu_3 \quad (\text{or } (n_3-1) \cdot r_3 \cdot \mu_3) \tag{29}$$

The initial probability of the modified Markov chain $p^+(n_1,n_2,n_3)$ is obtained by considering the system state immediately after the tagged flow joins the system in steady state. This means that the probability that the system is in state $(n_1,n_2,n_3)$ after the tagged flow's arrival is proportional to the steady state probability of state $(n_1,n_2-1,n_3)$ (or $(n_1,n_2,n_3-1)$). Consequently:

$$p^{2+}(n_1,n_2,n_3) \;=\; \frac{p(n_1,n_2-1,n_3)}{\sum_{i \in F} p(n_1,n_2,n_3)} \tag{30}$$

$$p^{3+}(n_1, n_2, n_3) = \frac{p(n_1, n_2, n_3 - 1)}{\sum_{i \in F} p(n_1, n_2, n_3)} \qquad (31)$$

To obtain the moments of $\tilde{\theta}_t$, a Markov Reward model is defined over $\{Z(t), t \geq 0\}$ in accordance with reference [11]. $\tilde{\theta}_t$ is a random variable which depends on the random arrival and departure of the rigid, adaptive and non-adaptive elastic flows as described by B. The reward rate associated we the states of the modified Markov chain represents the bandwidth of the tagged adaptive elastic flows in that state. Let $t_i$ be the reward rate (the bandwidth of the tagged adaptive elastic flow) in state i and T the diagonal matrix composed of the $t_i$ entries. $t_i = r_2(i)-b_2$, where $r_2(i)$ is the bandwidth compression in state i. In this way, the dynamics of the number of flows in the system during the service of the tagged flow is described by the Modified Markov chain, and the instantaneous bandwidth of the tagged flow is described by the instantaneous reward rate. If there are more flows in the system, the bandwidth of the tagged flow decreases towards $b_2{}^{min}$ and if there are less flows, it increases towards $b_2$. The generator matrix B and the reward matrix T define the Markov Reward model that accumulates $t \cdot \tilde{\theta}_t$ amounts of reward in the interval (0, t). This means that the reward accumulated in the interval (0, t) represents the amount of data transmitted through the tagged flow in this interval, and $\tilde{\theta}_t$ is the amount of transmitted data / t.

$T_x$ is the random amount of time that it takes to transmit x units of data through the tagged flow. By defining a Markov Reward model as above, the reward accumulated in the interval (0, t) represents the random amount of data transmitted through the tagged flow, and hence $T_x$ is the time it takes to accumulate x amounts of reward. This measure is commonly referred to as completion time.

Having the initial probability distribution $p^{2+}(n_1, n_2, n_3)$, and $p^{3+}(n_1, n_2, n_3)$, the generator matrix B and the reward matrix T, the numerical analysis method proposed in reference [11] is applied to evaluate the moments of $\tilde{\theta}_t$ and $T_x$. This numerical method is applicable for Markov Reward models with large state spaces ($\approx 10^6$ states).

*Numerical examples of the application of the link capacity sharing algorithm*

By way of example, consider a transmission link of capacity C = 100 Mbps and supporting three different service classes: rigid, adaptive elastic and non-adaptive elastic service classes. The parameters, given as network traffic inputs and determined by the link sharing algorithm, of this system are as follows:

$$C_{COM} = 20 \text{ Mbps}, C_{ELA} = 80 \text{ Mbps};$$

$$b_1 = 1 \text{ Mbps}, b_2 = 5 \text{ Mbps}, b_3 = 3 \text{ Mbps};$$

$$\lambda_1 = \lambda_3 = 12 \ 1/\text{min};$$

$$\mu_1 = \mu_2 = \mu_3 = 1 \ 1/\text{min};$$

$$r_2{}^{min} = 0.05, r_3{}^{min} = 0.001;$$

$$N_{COM} = 20, N_{EL2} = 20, N_{EL3} = 20.$$

The effect of the arrival rate $\lambda_2$ of the adaptive elastic flows on the corresponding blocking probability for a number of values of <u>minimum</u> accepted throughput is demonstrated in Table III below.

Table III

| $\Pr(\tilde{\theta}_t \geq \tilde{\theta}_{min}) \geq (1-\varepsilon_2)$ | $\lambda_2 = 12$ | $\lambda_2 = 14$ | $\lambda_2 = 16$ |
|---|---|---|---|
| $\tilde{\theta}_{min} = 2.6$ | 89.4 % | 83.6 % | 77.7% |
| 3 | 84.2% | 75 .1 % | 65.5% |
| 3.4 | 74.4% | 62.0% | 50.8% |
| 3.8 | 64.3 % | 47.8% | 34.9% |
| 4.2 | 42.5% | 23.4% | 10.5% |
| 4.6 | 4.8% | 0.14% | - |

As the minimum accepted throughput $\tilde{\theta}_{min}$ for the adaptive elastic traffic is assigned higher and higher values, the probability that an adaptive elastic flow obtains this throughput decreases. The increase of the arrival rate of the adaptive elastic flows results in more adaptive elastic flows in the system, and hence the throughput decreases together with the probability that the adaptive elastic flows obtain the required bandwidth.

The effect of the arrival rate $\lambda_3$ of the non-adaptive elastic flows on the corresponding blocking probability for a number of values of <u>minimum</u> accepted throughput is demonstrated in Table IV below. In this case, the system parameters are:

$$C = 250 \text{ Mbps};$$

$$C_{COM} = 50 \text{ Mbps}, \ C_{ELA} = 200 \text{ Mbps};$$

$$b_1 = 1 \text{ Mbps}, \ b_2 = 3 \text{ Mbps}, \ b_3 = 5 \text{ Mbps};$$

$$\lambda_1 = 40 \ 1/\text{min}, \ \lambda_2 = 25 \ 1/\text{min};$$

$$\mu_1 = \mu_2 = \mu_3 = 1 \ 1/\text{min};$$

$$r_2^{min} = 0.4, \ r_3^{min} = 0.05;$$

$$N_{COM} = 50, \ N_{EL2} = 120, \ N_{EL3} = 180.$$

Note that in this case the modified Markov chain describing the system behavior during the service of a tagged non-adaptive elastic flow has 1,116,951 states and 6,627,100 transitions.

Table IV

| $\Pr(\tilde{\theta}_x \geq \hat{\theta}_{min}) \geq (1-\varepsilon_3)$ | $\lambda_3 = 20$ | $\lambda_3 = 25$ | $\lambda_3 = 30$ |
|---|---|---|---|
| $\hat{\theta}_{min} = 2.5$ | 99.98% | 99.6% | 88.1% |
| 3.33 | 99.8% | 94.36% | 32.5% |
| 4.0 | 97.4% | 68.1% | 13.8% |
| 4.34 | 91.5% | 59.8% | - |

(continued)

| $Pr(\widetilde{\theta}_x \geq \hat{\theta}_{min}) \geq (1-\varepsilon_3)$ | $\lambda_3 = 20$ | $\lambda_3 = 25$ | $\lambda_3 = 30$ |
|---|---|---|---|
| 4.54 | 89.6% | 52.3% | - |
| 4.76 | 86.0% | 30.9% | - |

In similarity to the effects demonstrated in Table III, as the minimum accepted throughput for the non-adaptive elastic traffic is assigned higher and higher values, the probability that a non-adaptive elastic flow obtains this throughput decreases. Also, the increase of the arrival rate results in a decreasing probability that the non-adaptive elastic flows obtain the required bandwidth.

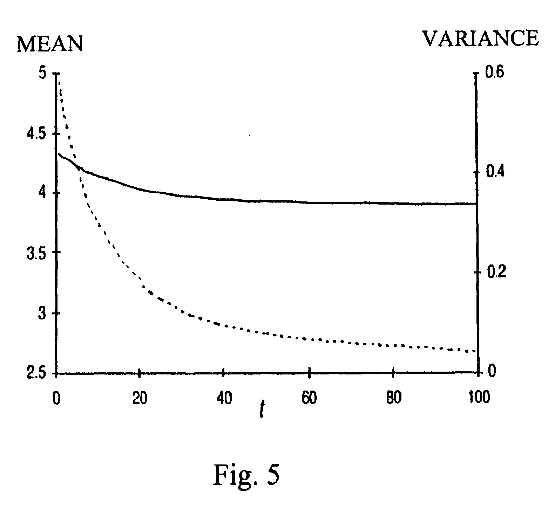

To get an impression of the relation of average throughput and throughput threshold constraints reference is made to Fig. 5, which illustrates the mean and the variance of the throughput of adaptive elastic flows as a function of their service time. The graph of Fig. 5 relates to the system considered for Table III, with $\lambda_2 = 14$. The mean throughput is shown by a solid line, whereas the variance is shown by a dashed line. It can thus be seen that for "short" (with respect to service time) connections , the variance of the throughput is quite significant, and consequently, the average throughput and the throughput threshold constraints have significantly different meanings. For "long" connections, the variance of the throughput almost vanishes, and the mean throughput provides a meaningful description of the bandwidth available for adaptive elastic flows. Note that $\widetilde{\theta}_t$ tends to approach a deterministic value, the steady state throughput, as t goes to infinity.

Finally, we study an example of how to select $N_{EL2}$ and $N_{EL3}$ to provide the required QoS parameters. Assume that after the division of the link capacity and the dimensioning of the rigid class, the system parameters have the following values:

$$C = 100 \text{ Mbps;}$$

$$C_{COM} = 20 \text{ Mbps, } C_{ELA} = 80 \text{ Mbps;}$$

$$b_1 = 1 \text{ Mbps, } b_2 = 5 \text{ Mbps, } b_3 = 3 \text{ Mbps;}$$

$$\lambda_1 = 12 \ 1/\text{min, } \lambda_2 = 12 \ 1/\text{min, } \lambda_3 = 12 \ 1/\text{min;}$$

$$\mu_1 = \mu_2 = \mu_3 = 1 \text{ s (here expressed as mean holding time);}$$

$$b_3{}^{min} = 0.1 \text{ Mbps;}$$

The parameters $N_{EL2}$ and $N_{EL3}$ have to be such that the elastic blocking probabilities are less than 1% ($B_2 < 0.01$, $B_3 < 0.01$) and the average throughput parameters fulfill $E(\hat{\theta}) \geq 4.05$ and $E(\widetilde{\theta}) \geq 2.35$.

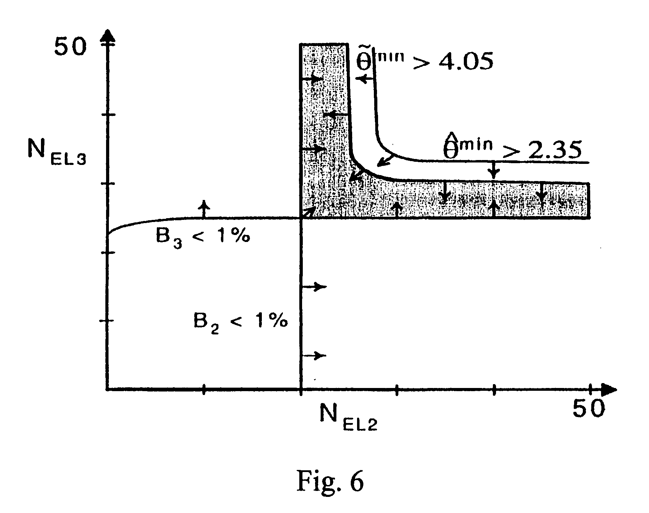

The set of $N_{EL2}$ and $N_{EL3}$ parameters that fulfill the QoS requirements are depicted in the gray area of Fig. 6. The blocking probability limit of the adaptive elastic class is a vertical line due to the independence on the load of the non-adaptive elastic class. The blocking probability limit of the non-adaptive elastic class is a horizontal line. With the considered low level of overall load, the average elastic throughputs are hardly sensitive to the $N_{EL2}$ and $N_{EL3}$ parameters after a given limit. In this example, the tighter of the two bandwidth limits that determines the acceptable $N_{EL2}$ and $N_{EL3}$ values, is the $E(\widetilde{\theta}) \geq 4.05$ bound.

*Inversion of the optimization task*

The new elastic POL policy allows for a natural inversion of the optimization task so that instead of minimizing blocking probabilities for elastic traffic under throughput constraints, the elastic throughputs are maximized under blocking probability constraints. In similarity to the link capacity sharing method illustrated in the flow diagram of Fig. 2, traffic input parameters are received (similar to step 101), the common link capacity part $C_{COM}$ is determined (similar to step 102) and initial values of the cut-off parameters are selected (similar to step 103). Next, the performance of the system is analyzed (similar to step 104), but now primarily with respect to elastic blocking probabilities. In particular, the elastic blocking probabilities in the system are analyzed and related (similar to step 105) to the blocking probability constraints. If the blocking probabilities are too high, then the cut-off parameters are increased, reducing the blocking probabilities and also reducing the throughputs. On the other hand, if the blocking probabilities are lower than the blocking constraints, then the cut-off parameters can be reduced so that the blocking probabilities as well as the throughputs are increased. In this way, by way of iteration, the throughputs can be increased to a maximum, while still adhering to the blocking constraints for elastic flows. As the aim now is to maximize the elastic throughputs, and as it might be advisable to have a worst-case guarantee for the throughputs of elastic traffic, the cut-off parameters must be as low as possible, and at least low enough to fulfill the worst-case throughput constraints, while still fulfilling the blocking probability constraints imposed on the elastic traffic.

Naturally, the link capacity sharing algorithm, irrespective of whether it is adapted for minimizing elastic blocking or for maximizing elastic throughput, is also applicable to elastic traffic only. For example, in the absence of rigid traffic, $C_{COM}$ is reduced to zero, and the overall link capacity sharing algorithm is reduced to the mathematical formulas for determining the cut-off parameters under throughput/blocking constraints. Furthermore, in the case of a single elastic traffic class, only a single cut-off parameter needs to be determined according to the above iterative link sharing algorithm.

### Link capacity sharing algorithm - the ATM network example

Although, the link capacity sharing algorithm has been described above with reference to an IP network carrying a single rigid traffic class and two different elastic traffic classes, it should be understood that the invention is not limited thereto, and that the algorithm is applicable to other types of networks and other traffic classes. In fact, an example of the elastic POL algorithm applied in an ATM network carrying narrow-band CBR (Constant Bit Rate) traffic and wide-band CBR traffic, as well as ABR (Available Bit Rate) traffic will be outlined below.

In this example, calls arriving at a transmission link generally belong to one of the following three traffic classes:

- Class 1 - Narrow-band CBR calls, characterized by their peak bandwidth requirement $b_1$, call arrival rate $\lambda_1$ and departure rate $\mu_1$.

- Class 2 - Wide-band CBR calls, characterized by their peak bandwidth requirement $b_2$, call arrival rate $\lambda_2$ and departure rate $\mu_2$.

- Class 3 - ABR calls, characterized by their peak bandwidth requirement $b_3$, minimum bandwidth requirement $b_3^{min}$, call arrival rate $\lambda_3$ and ideal departure rate $\mu_3$. The ideal departure rate is experienced when the peak bandwidth is available during the entire duration of the call.

It should be noted that the CBR classes can be likened by the rigid traffic class of the above IP network example, and that the ABR class can be likened by the non-adaptive elastic traffic class described above in connection with the IP network example. In this respect, the assumptions in the model formulated in the IP network example are equally applicable in the present example.

The elastic POL policy described above is applied to the mixed CBR-ABR traffic environment in the ATM network considered. This means that the link capacity C is divided into two parts, a common part $C_{COM}$ for CBR calls as well as ABR calls, and a dedicated part $C_{ABR}$, which is reserved for the ABR calls, such that $C = C_{COM} + C_{ABR}$. An admission control parameter $N_{ABR}$, also referred to as a cut-off parameter, is introduced for the ABR calls. Under the elastic POL policy, the number $n_1$, $n_2$ and $n_3$ of narrow-band CBR, wide-band CBR and ABR calls, respectively, in progress on the link is subject to the following constraints:

$$n_1 \cdot b_1 + n_2 \cdot b_2 \leq C_{COM} \qquad (32)$$

$$N_{ABR} \cdot b_3^{min} \leq C_{ABR} \qquad (33)$$

$$n_3 \leq N_{ABR} \qquad\qquad (34)$$

In (1) the ABR calls are protected from CBR calls. In (2-3) the maximum number of ABR calls is limited by two constraints. Expression (2) protects CBR calls form ABR calls, while (3) protects the in-progress ABR calls from new ABR calls. In this case, the elastic POL policy is fully determined by the division of the link capacity, specified by $C_{COM}$, and the admission control parameter $N_{ABR}$. The performance of the elastic POL policy is tuned by these parameters.

According to a preferred embodiment of the invention, the link capacity sharing algorithm aims at setting the output parameters $C_{COM}$ and $N_{ABR}$ of the elastic POL policy in such a way as to minimize the call blocking probability for the ABR calls, while being able to take into account blocking probability constraints (GoS) for the different types of CBR calls and a minimum throughput constraint for the ABR calls. Therefore, each CBR class is associated with a maximum accepted call blocking probability $B_1^{max}$ and $B_2^{max}$, and the ABR class is associated with a minimum accepted throughput $\theta_{min}$, which can be treated in similarity to the <u>minimum</u> accepted throughput $\hat{\theta}_{min}$ for the non-adaptive elastic traffic of the IP network example.

Although the ABR blocking probability is being minimized, it is nevertheless normally advisable, although not necessary, to have a worst-case guarantee of the call blocking probability for ABR calls, and associate also the ABR class with a maximum allowed blocking probability $B_3^{max}$.

The parameters and performance measures associated with the CBR classes and the ABR class are summarized in Table V below.

Table V

| Class ⇓ | Input parameters | | | | | | Performance measures | | System state |
|---|---|---|---|---|---|---|---|---|---|
| | Call arrival rate | Departure rate | Peak bandwidth requirement | Minimum bandwidth requirement | Maximum accepted blocking probability | Minimum accepted throughout | Blocking | Throughput | Number of flows in the system |
| N-CBR | $\lambda_1$ | $\mu_1$ | $b_1$ | - | $B_1^{max}$ | - | $B_1$ | - | $n_1$ |
| W-CBR | $\lambda_2$ | $\mu_2$ | $b_2$ | - | $B_2^{max}$ | | $B_2$ | - | $n_2$ |
| ABR | $\lambda_3$ | $\mu_3$ | $b_3$ | $b_3^{min}$ | $(B_3^{max})$ | $\theta_{min}$ | $B_3$ | $\theta$ | $n_3$ |

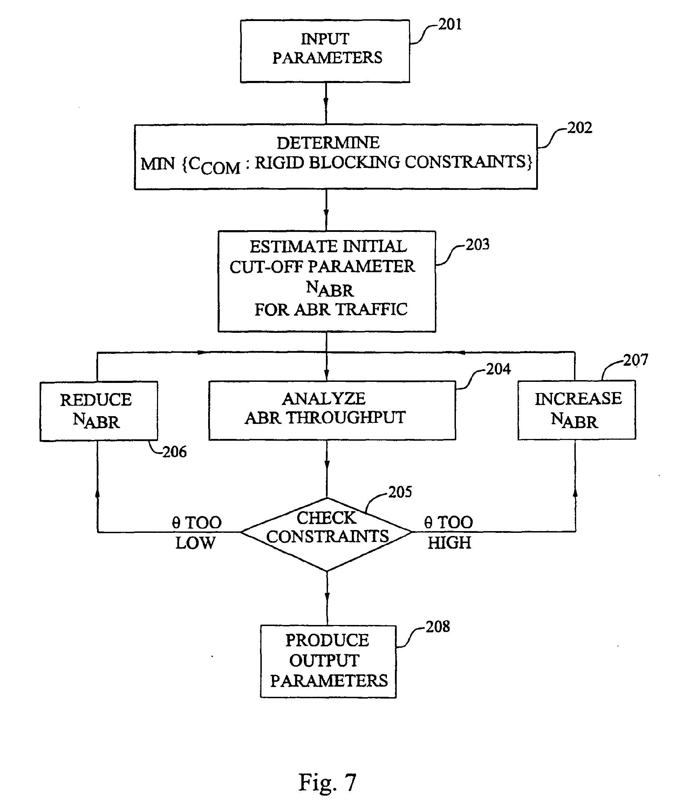

The problem of determining the output parameters of the elastic POL policy under the above constraints is outlined below with reference to Fig. 7, which is a schematic flow diagram of the overall link capacity sharing algorithm for a mixed CBR-ABR traffic environment according to a preferred embodiment of the invention. In the first step 201, the required input parameters are provided. In step 202, the GoS (call blocking) requirement for CBR traffic is guaranteed by the proper setting of $C_{COM}$. In particular, we determine the <u>minimum</u> required capacity of $C_{COM}$ for CBR calls that guarantees the required blocking probabilities $B_1{}^{max}$ and $B_2{}^{max}$:

$$\min\{C_{COM}: B_1 \leq B_1{}^{max}, B_2 \leq B_2{}^{max}\} \qquad (35)$$

For example, the well-known Erlang-B formula can be used to estimate such a value of $C_{COM}$ based on arrival and departure rates and peak bandwidth requirements for the CBR classes as inputs.

Next, we have to determine a maximum number of ABR calls ($N_{ABR}$) that can be simultaneously present in the system at the same time as the required throughput and blocking requirements are fulfilled.

In this particular embodiment, the link capacity sharing algorithm aims at minimizing the blocking probability of the ABR calls under a <u>minimum</u> throughput constraint. To accomplish this, the invention proposes an iterative procedure, generally defined by steps 203-207, for tuning the cut-off parameter so that the throughput-threshold constraint is just fulfilled, generally no more and no less. First, in step 203, an initial value of the cut-off parameter is estimated. Next, the performance of the system is analyzed (step 204) with respect to the ABR throughput, and related (step 205) to the throughput-threshold constraint. If the ABR throughput is too low, then the cut-off parameter is reduced (step 206), increasing the blocking probability and also increasing the throughput. On the other hand, if the ABR throughput is higher than the throughput-threshold, then the cut-off parameter can be increased (step 207) so that the blocking probability (as well as the throughput) is reduced. In this way, by iteratively repeating the steps 204, 205 and 206/207, the ABR blocking probability can be reduced to a minimum, while still adhering to the throughput constraint.

Preferably, the performance measures, ABR throughput and possibly also ABR blocking, are analyzed in more or less the same way as described above in connection with the IP network example. In short, this means determining the steady state distribution of the Markov chain that describes the dynamics and behavior of the mixed CBR-ABR environment, and calculating blocking and throughput measures based on the determined distribution. It should though be noted that here the throughput-threshold constraint, analogous to expression (7), is checked based on the transient analysis of the Markov chain that describes the mixed CBR-ABR environment using the numerical method proposed in reference [11] and applying the Markov inequality.

It is of course possible to invert the optimization task also for the ATM network example, in substantially the same manner as explained above for the IP network example.

*Numerical examples of the application of the link capacity sharing algorithm*

By way of example, consider an ATM transmission link of capacity C = 155 Mbps and supporting three different service classes: two CBR classes and an ABR class, as described above. The input parameters of this ATM transmission link system are:

$$b_1 \text{ (n-CBR)} = 3 \text{ Mbps}, b_2 \text{ (w-CBR)} = 6 \text{ Mbps}, b_3 \text{ (ABR)} = 10 \text{ Mbps};$$

$$\lambda_1 = 6 \ 1/s, \lambda_2 = 3 \ 1/s, \lambda_3 = 12 \ 1/s;$$

$$\mu_1 = \mu_2 = \mu_3 = 1 \ 1/min;$$

$$r_2{}^{min} = 0.05, r_3{}^{min} = 0.001;$$

$$N_{COM} = 50.$$

Furthermore, it is required that the blocking probabilities of the narrow-band and wide-band CBR calls are less than $B_1^{max} = 2$ % and $B_2^{max} = 4$ % , respectively. It thus follows that the minimal bandwidth for $C_{COM}$ necessary to provide these blocking probabilities is 60 Mbps, which leaves $C_{ABR} = 95$ Mbps for the ABR calls.

To examine the trade-off between throughput and blocking probability for the ABR traffic, reference is made to Table VI below, which illustrates the average throughput $E(\theta)$ and the blocking probability $B_3$ for the ABR traffic class for different values of $N_{ABR}$.

Table VI

| $N_{ABR}$ | 10 | 20 | 40 | 60 | 80 | 100 | 150 |
|---|---|---|---|---|---|---|---|
| $B_3$ | 0.310 | 0.0811 | 0.0320 | 0.0212 | 0.00141 | 0.00112 | 0.000461 |
| $E(\theta)$ | 9.99 | 7.9 | 4.83 | 3.45 | 2.69 | 2.2 | 1.52 |

From Table VI, the trade-off between throughput and blocking is apparent; high-blocking = high throughput, and low blocking = low throughput. In the elastic POL policy according to the invention, this trade-off is conveniently controlled by means of the $N_{ABR}$ cut-off parameter as can be seen from Table VI. For instance, when constraint $\theta^{min}$ on the average throughput is set to 2.2 Mbps, the maximum number ($N_{ABR}$) of simultaneously active ABR calls is limited to 100.

In simulations, it has been observed that the elastic POL policy is superior to the well-known Complete Partitioning (CP) policy under all loads, both in terms of blocking probabilities and ABR throughput. This is partly due to the fact that the POL policy allows ABR calls to make use of any bandwidth of the $C_{COM}$ part currently not used by CBR calls.

Finally, to examine the impact of the $C_{COM}$ parameter on the blocking probabilities and the average throughput of ABR traffic, reference is made to Table VII below.

Table VII

| $C_{COM}$ | 69 | 66 | 63 | 60 | 57 | 54 |
|---|---|---|---|---|---|---|
| $B_1$ | 0.00498 | 0.00770 | 0.0116 | 0.0171 | 0.0244 | 0.0342 |
| $B_2$ | 0.0126 | 0.0192 | 0.0284 | 0.0411 | 0.0578 | 0.0794 |
| $B_3$ | 0.0149 | 0.0141 | 0.0129 | 0.0115 | 0.00973 | 0.00773 |
| $E(\theta)$ | 2.04 | 2.08 | 2.13 | 2.20 | 2.31 | 2.46 |

The $C_{COM}$ parameter offers a way of controlling the trade-off between the CBR blocking probabilities on one hand, and the ABR blocking probability and throughput on the other hand. From Table VII, it can be seen that both the ABR throughput (increasing) and the ABR blocking (decreasing) are improved at the expense of degrading CBR blocking probabilities.

It is important to understand that the preceding description is intended to serve as a framework for an understanding of the invention. The embodiments described above are merely given as examples, and it should be understood that the present invention is not limited thereto.

**REFERENCES**

[1] L. Massoulie, J. Roberts, "Bandwidth Sharing : Objectives and Algorithms", IEEE Infocom '99, pp. 1395-1403, March 1999.

[2] L. Massoulie, J. Roberts, "Bandwidth Sharing and Admission Control for Elastic Traffic", ITC Specialist Seminar, Yokohama, October 1998.

[3] L. Massoulie, J. Roberts, "Arguments in Favour of Admission Control for TCP Flows", 16th International Teletraffic Congress, Edinburgh, UK, June, 1999.

[4] R.J. Gibbens and F.P. Kelly, "Distributed Connection Acceptance Control for a Connectionless Network", 16th International Teletraffic Congress, Edinburgh, UK, June, 1999.

[5] F. P. Kelly, "Charging and Rate Control for Elastic Traffic", European Transaction on Telecommunications, pp. 33-37, Vol. 8, 1997.

[6] Wu-chang Feng, Dilip D. Kandlur, Debanjan Saha and Kang. G. Shin, "Understanding and Improving TCP Performance Over Networks with Minimum Rate Guarantees", IEEE/ACM Transactions on Networking, pp. 173-187, Vol. 7, No. 2, April 1999.

[7] E. D. Sykas, K. M. Vlakos, I. S. Venieris, E. N. Protonotarios, "Simulative Analysis of Optimal Resource Allocation and Routing in IBCN's", IEEE J-SAC, Vol. 9, No. 3, 1991.

[8] Keith W. Ross, "Multi-service Loss Models for Broadband Telecommunication Networks", Springer-Verlag, 1995, ISBN 3-540-19918-7.

[9] W. J. Stewart, "Introduction to the Numerical Solution of Markov Chains", pp. 220-221, Princeton University Press, Princeton, New Jersey, ISBN 0-691-03699-3, 1994.

[10] M. Frontini, A. Tagliani, "Entropy-convergence in Stieltjes and Hamburger moment problem", Appl. Math. and Comp., 88, pp. 39-51, 1997.

[11] M. Telek and S.Rácz, "Numerical analysis of large Markov reward models", Performance Evaluation, 36&37: 95-114, August 1999.

[12] A. Smith, J. Adams, G. Tagg, "Available Bit Rate - A New Service for ATM", Computer Networks and ISDN Systems, 28, pp. 635-640, 1996.

**Claims**

1. A method for sharing link capacity in a network (10), wherein said method comprises the step of receiving (101; 201) network traffic input parameters;
   **characterized in that** said method further comprises the steps of:

   dividing said link capacity into a first part ($C_{COM}$) common to elastic traffic and non-elastic traffic and a second part ($C_{ELA}$; $C_{ABR}$) dedicated for elastic traffic, based on at least part of said network traffic input parameters; and
   determining (103-108; 203-208) at least one admission control parameter for said elastic traffic based on said division of link capacity and at least part of said network traffic input parameters.

2. The method according to claim 1,
   **characterized in that** said method further comprises the step of exercising admission control for elastic traffic flows based on said determined admission control parameter(s).

3. The method according to claim 1,
   **characterized in that** said dividing step includes the step of determining (102; 202) a minimum required capacity of said common part relating to non-elastic traffic given at least one maximum allowed blocking probability for said non-elastic traffic.

4. The method according to claim 1,
   **characterized in that** said step of determining at least one admission control parameter comprises the step of determining a maximum number ($N_{EL2}$, $N_{EL3}$, $N_{ABR}$) of admissible elastic traffic flows based on at least one call-level constraint imposed on said elastic traffic.

5. The method according to claim 4,
   **characterized in that** said step of determining a maximum number of admissible elastic traffic flows is based on a call-level model for elastic traffic, and said call-level constraint(s) is related to at least one of throughput and blocking probability of said elastic traffic.

6. The method according to claim 5,
   **characterized in that** said step of determining a maximum number of admissible elastic traffic flows comprises the steps of:

   determining (103; 203) an initial value of the number of admissible elastic traffic flows on a link in said network; iteratively performing the steps of:

   i) evaluating (105; 205) said throughput/blocking constraint(s) imposed on said elastic traffic based on the initial/current value of the number of admissible elastic traffic flows; and
   ii) adjusting said number of admissible elastic traffic flows based on said evaluation; and

   terminating said iteration process and extracting (108; 208) said maximum number of admissible elastic traffic flows when said constraint(s) is/are met.

7. The method according to claim 6,
   **characterized in that** said step of adjusting said number of admissible elastic traffic flows based on said evaluation comprises the steps of:

   reducing (106; 206) said number of admissible elastic traffic flows if a value related to the throughput of said elastic traffic flows is lower than a predetermined threshold given by said throughput/blocking constraint(s); and increasing (107; 207) said number of admissible elastic traffic flows if said throughput related value is higher than said threshold.

8. The method according to claim 4,
   **characterized in that** said step of determining said maximum number of admissible elastic connections is based on minimizing the blocking probability of requested elastic traffic connections with respect to the number of admissible elastic traffic connections under at least one throughput-threshold constraint for in-progress elastic traffic connections.

9. The method according to claim 8,
   **characterized in that** said minimization of the blocking probability of elastic traffic under at least one throughput-threshold constraint is performed also under at least one given constraint on maximum allowed blocking probability for elastic traffic.

10. The method according to claim 4,
    **characterized in that** said step of determining said maximum number of admissible elastic connections is based on maximizing the elastic traffic throughput with respect to the number of admissible elastic traffic connections under at least one blocking probability constraint for requested elastic traffic connections.

11. The method according to claim 1,
    **characterized in that** said elastic traffic comprises a number of elastic traffic classes, and said step of determining at least one admission control parameter comprises the step of determining, for each of one said elastic traffic classes, a maximum number of admissible elastic traffic flows based on a respective throughput/blocking probability constraint imposed on the elastic traffic class.

12. The method according to claim 11,
    **characterized in that** said method further comprises the steps of:

    determining the associated traffic class for each of said requested connections; and
    controlling admission of each requested connection based on the corresponding traffic-class specific maximum number of admissible elastic connections.

13. The method according to claim 1,
    **characterized in that** said network traffic input parameters include at least said link capacity, at least one blocking probability constraint for non-elastic traffic, and at least one throughput/blocking constraint for elastic traffic.

14. The method according to claim 1,
**characterized in that** said network traffic input parameters further include arrival and departure rates as well as peak bandwidth requirements for non-elastic and elastic traffic, and a minimum bandwidth requirement for elastic traffic.

15. The method according to claim 1,
**characterized in that** said elastic traffic comprises at least one of the following: adaptive elastic traffic flows of Internet Protocol (IP) networks, non-adaptive elastic traffic flows of IP networks, and Available Bit Rate (ABR) flows of ATM networks.

16. The method according to claim 1, wherein said link capacity is representative of link bandwidth, and said elastic traffic includes at least one elastic traffic class, and said second dedicated part ($C_{ELA}$; $C_{ABR}$) of said link bandwidth is allocated to connections of said elastic traffic class(es) based on link bandwidth utilization under at least one throughput/blocking constraint imposed on the connections of said elastic traffic class(es).

17. The method according to claim 16,
**characterized in that** said method further comprises the step of determining (103-108; 203-208) a maximum number ($N_{EL2}$, $N_{EL3}$; $N_{ABR}$) of admissible elastic traffic connections on the link based on said throughput/blocking constraint(s),
wherein said step of allocating bandwidth to connections of said elastic traffic class(es) is based on said maximum number of admissible elastic traffic connections.

18. The method according to claim 17,
**characterized in that** said step of determining a maximum number of admissible elastic traffic connections is based on minimizing the blocking probability of elastic traffic connections with respect to the number of admissible elastic traffic connections under at least one throughput-threshold constraint for in-progress elastic traffic connections.

19. The method according to claim 17,
**characterized in that** said step of determining a maximum number of admissible elastic traffic connections is based on maximizing the throughput of in-progress elastic traffic connections with respect to the number of admissible elastic traffic connections under at least one blocking probability constraint for requested elastic traffic connections.

20. The method according to claim 17,
**characterized in that** said step of determining a maximum number of admissible elastic traffic connections comprises the steps of:

determining (103; 203) an initial value of the number of admissible elastic traffic connections on said link;
iteratively performing the steps of:

i) determining (104; 204) throughput/blocking-probability measures based on the initial/current of the number of admissible elastic traffic connections on said link;
ii) evaluating (105; 205) said throughput/blocking constraint(s) imposed on said elastic traffic based on the determined throughput/blocking measures; and
iii) adjusting (106/107; 206/207) said number of admissible elastic traffic connections based on said evaluation; and

terminating said iteration process and extracting (108; 208) said maximum number of admissible elastic traffic connections when substantially meeting said constraint(s).

21. The method according to claim 1, further comprising the steps of:

determining (103-108; 203-208) a maximum number ($N_{EL2}$, NEW, $N_{ABR}$) of admissible elastic traffic connections on said link based on said network traffic input parameters, said input parameters including at least one throughput/blocking constraint imposed on said elastic traffic;
receiving requests for elastic traffic connections on said link in said network;
exercising admission control for said requested elastic traffic connections based on said determined maximum number of admissible elastic traffic connections.

**22.** The method according to claim 1, wherein said network is an admission-control enabled IP network (10), **characterized in that** said method comprises the step of:

applying (101-108) a call-level model of a link carrying at least one non-elastic traffic class and a number $n$, where $n$ is an integer equal to or greater than 1, of elastic traffic classes, for dimensioning the link bandwidth sharing for throughput-blocking optimality based on said division of the link capacity into a first part ($C_{COM}$) common to elastic traffic and non-elastic traffic and a second part ($C_{ELA}$) dedicated for elastic traffic, wherein said call-level model is defined by:

said link having a predetermined bandwidth capacity C; and
for each one of said n elastic traffic classes, the elastic traffic being modeled as:

i) having a peak bandwidth requirement and a minimum bandwidth requirement;
ii) occupying the maximum possible bandwidth within said peak and minimum bandwidth requirements; and
iii) being associated with at least one of a minimum accepted throughput and a maximum accepted blocking probability.

**23.** The method according to claim 22,
**characterized in that**, for each one of said n traffic classes, the elastic traffic is further being modeled as:

iv) arriving dynamically according to a Poisson process and being associated with an arrival rate as well as a departure rate;
v) sharing proportionally equally the bandwidth available for the elastic traffic class among the elastic flows; and
vi) being associated with a minimum holding time.

**24.** The method according to claim 22,
**characterized in that** said n elastic traffic classes include a first traffic class for adaptive elastic flows, and a second traffic class for non-adaptive elastic flows.

**25.** The method according to claim 1, further comprising the step of determining a steady state distribution of Markov chain describing the dynamics of a network link carrying traffic of a number of traffic classes including a non-elastic traffic class as well as a non-adaptive elastic traffic class by:

defining a link capacity sharing policy for said link based on said division of the link capacity into a first part common ($C_{COM}$) to elastic traffic and non-elastic traffic and a second part ($C_{ELA}$; $C_{ABR}$) dedicated for elastic traffic;
determining a multi-dimensional Markov chain having a set of feasible states for the number of active connections of said traffic classes according to constraints imposed by said link sharing policy;
calculating an initial approximation of the steady state distribution of said Markov chain based on Markov chain product form calculations; and
iteratively determining the steady state distribution starting from said initial approximation of the steady state distribution.

**26.** The method according to claim 25,
**characterized in that** said step of calculating an initial approximation of the steady state distribution comprises the steps of:

determining the steady state distribution of traffic classes other than said non-adaptive traffic class as if there is no non-adaptive elastic traffic in the system; and
determining state probabilities assuming equilibrium of the incoming and outgoing traffic of one of said other traffic classes and said non-adaptive elastic traffic class.

**27.** The method according to claim 25,
**characterized in that** said step of iteratively determining the steady state distribution is based on a biconjugate gradient method.

**28.** The method according to claim 25,
**characterized in that** blocking probabilities for said traffic classes are calculated based on a steady state distribution resulting from said iterative determination.

29. A device for sharing link capacity in a network (10), said device having means for receiving network traffic input parameters,
**characterized in that** said device comprises:

    means (21; 21, 25) for dividing said link capacity into a first part common to elastic traffic and non-elastic traffic and a second part dedicated for elastic traffic, based on at least part of said network traffic input parameters; and
    means (21) determining at least one admission control parameter for said elastic traffic based on said division of link capacity and at least part of said network traffic input parameters.

30. The device according to claim 29,
**characterized in that** said device further comprises means (22) for exercising admission control for elastic traffic flows based on said determined admission control parameter(s).

31. The device according to claim 29,
**characterized in that** said dividing means includes means for determining a minimum required capacity of said common part relating to non-elastic traffic given at least one maximum allowed blocking probability for said non-elastic traffic.

32. The device according to claim 29,
**characterized in that** said means for determining at least one admission control parameter comprises means for determining a maximum number of admissible elastic traffic flows based on at least one throughput/blocking constraint imposed on said elastic traffic.

33. The device according to claim 32,
**characterized in that** said means for determining a maximum number of admissible elastic traffic flows is configured for:

    initially determining a number of admissible elastic traffic flows on a link in said network;
    iteratively evaluating said throughput/blocking constraint(s) imposed on said elastic traffic based on the current number of admissible elastic traffic flows and adjusting said number of admissible elastic traffic flows based on said evaluation; and
    terminating said iteration process and extracting said maximum number of admissible elastic traffic flows when meeting said constraint(s).

34. The device according to claim 32,
**characterized in that** said means for determining a maximum number of admissible elastic traffic flows is configured to determine said maximum number based on minimizing the blocking probability of requested elastic traffic connections with respect to said maximum number of admissible elastic traffic connections under at least one throughput-threshold constraint for in-progress elastic traffic connections.

35. The device according to claim 32,
**characterized in that** said means for determining a maximum number of admissible elastic traffic flows is configured to determine said maximum number based on maximizing elastic traffic throughput with respect to said maximum number of admissible elastic traffic connections under at least one blocking probability constraint for elastic traffic.

36. The device according to claim 29,
**characterized in that** said receiving means receives network traffic input parameters including said link capacity, arrival and departure rates and peak bandwidth requirements for non-elastic as well as elastic traffic, a minimum bandwidth requirement for elastic traffic, at least one blocking probability constraint for non-elastic traffic, and at least one throughput/blocking constraint for elastic traffic.

37. The device according to claim 29,
**characterized in that** said elastic traffic comprises at least one of the following:

    adaptive elastic traffic flows of Internet Protocol (IP) networks, non-adaptive elastic traffic flows of IP networks, and available bit rate (ABR) flows of ATM networks.

**38.** The device according to claim 29, wherein said link capacity is representative of link bandwidth, and said elastic traffic includes at least one elastic traffic class, and said device further comprises a processor (21) configured for allocating said second dedicated part of said link bandwidth to connections of said elastic traffic class(es) based on link bandwidth utilization under at least one throughput/blocking constraint imposed on the connections of said elastic traffic class(es).

**39.** The device according to claim 38,
**characterized in that** said processor (21) is configured for allocating a minimum required bandwidth of said common part to connections of non-elastic traffic classes given at least one maximum allowed blocking probability for said non-elastic traffic connections.

**40.** The device according to claim 38,
**characterized in that** said processor (21) is further configured for determining a maximum number of admissible elastic traffic connections on the link based on said throughput/blocking constraint(s), and for allocating bandwidth to said elastic traffic connections based on said dedicated part of the link bandwidth as well as said maximum number of admissible elastic traffic connections.

**41.** The device according to claim 40,
**characterized in that** said processor (21) is further configured for determining said maximum number of admissible elastic connections based on minimizing the blocking probability of elastic traffic connections with respect to the number of admissible elastic traffic connections under at least one throughput-threshold constraint for in-progress elastic traffic connections.

**42.** The device according to claim 40,
**characterized in that** said processor (21) is further configured for determining said maximum number of admissible elastic connections based on maximizing the throughput of elastic traffic connections with respect to the number of admissible elastic traffic connections under at least one blocking probability constraint for elastic traffic connections.

**43.** The device according to claim 29,
**characterized in that** said device comprises a processor (21) responsive to said network traffic input parameters and configured for:

determining a maximum number of admissible elastic traffic connections based on at least one throughput/ blocking constraint imposed on said elastic traffic;
receiving requests for elastic traffic connections; and
exercising admission control for said requested elastic traffic connections based on said determined maximum number of admissible elastic traffic flows.

**44.** The device according to claim 43,
**characterized in that** said processor (21) is further configured for determining said maximum number of admissible elastic connections based on iteratively improving link bandwidth utilization under said throughput/blocking constraint (s).

**Patentansprüche**

**1.** Verfahren zum gemeinsamen Nutzen von Verbindungskapazität in einem Netzwerkwerk (10), wobei das Verfahren den Schritt des Empfangens (101; 201) von Netzwerkwerkverkehrseingangsparametern aufweist,
**dadurch gekennzeichnet, dass** das Verfahren ferner die folgenden Schritte aufweist:

Aufteilen der Verbindungskapazität in einen ersten Teil ($C_{COM}$), den der elastische Verkehr und der nicht elastische Verkehr gemeinsam nutzen, und einen zweiten Teil ($C_{ELA}$; $C_{ABR}$), der für den elastischen Verkehr bestimmt ist, der auf mindestens einem Teil der Netzwerkwerkverkehrseingangsparameter beruht, und
Bestimmen (103-108; 203-208) mindestens eines Zulassungssteuerparameters für den elastischen Verkehr, basierend auf der Aufteilung der Verbindungskapazität und zumindest einem Teil der Netzwerkwerkverkehrseingangsparameter.

**2.** Verfahren nach Anspruch 1,

**dadurch gekennzeichnet, dass** das Verfahren ferner den Schritt des Ausübens der Zulassungssteuerung für elastische Verkehrsströme basierend auf dem oder den bestimmten Zulassungssteuerparametern umfasst.

3. Verfahren nach Anspruch 1,
**dadurch gekennzeichnet, dass** der Aufteilungsschritt den Schritt des Bestimmens (102; 202) einer erforderlichen Mindestkapazität des gemeinsam genutzten Teils in Zusammenhang mit nicht elastischem Verkehr, in Anbetracht mindestens einer maximalen zulässigen Blockierungswahrscheinlichkeit für den nicht elastischen Verkehr umfasst.

4. Verfahren nach Anspruch 1,
**dadurch gekennzeichnet, dass** der Schritt des Bestimmens mindestens eines Zulassungssteuerparameters den Schritt des Bestimmens einer maximalen Anzahl ($N_{EL2}$, $N_{EL3}$, $N_{ABR}$) zulässiger elastischer Verkehrsströme umfasst, basierend auf mindestens einer Verbindungsniveauauflage, die dem elastischen Verkehr auferlegt ist.

5. Verfahren nach Anspruch 4,
**dadurch gekennzeichnet, dass** der Schritt des Bestimmens einer maximalen Anzahl zulässiger elastischer Verkehrsströme auf einem Verbindungsniveaumodell für elastischen Verkehr beruht, und dass die eine oder mehreren Verbindungsniveauauflagen mit mindestens entweder der Durchsatz- oder Blockierungswahrscheinlichkeit des elastischen Verkehrs zusammenhängen.

6. Verfahren nach Anspruch 5,
**dadurch gekennzeichnet, dass** der Schritt des Bestimmens einer maximalen Anzahl zulässiger elastischer Verkehrsströme die folgenden Schritte umfasst:

Bestimmen (103; 203) eines Anfangswerts der Anzahl zulässiger elastischer Verkehrsströme auf einer Verbindung in dem Netzwerk,
iteratives Ausführen der folgenden Schritte:

i) Bewerten (105; 205) der einen oder mehreren Durchsatz-/Blockierungsauflagen, die dem elastischen Verkehr auferlegt sind, basierend auf dem Anfangs/aktuellen Wert der Anzahl zulässiger elastischer Verkehrsströme, und
ii) Einstellen der Anzahl zulässiger elastischer Verkehrsströme basierend auf der Bewertung, und

Beenden des Iterationsprozesses und Extrahieren (108; 208) der maximalen Anzahl zulässiger elastischer Verkehrsströme, wenn die Auflage oder Auflagen erfüllt werden.

7. Verfahren nach Anspruch 6,
**dadurch gekennzeichnet, dass** der Schritt des Einstellens der Anzahl zulässiger elastischer Verkehrsströme basierend auf der Bewertung die folgenden Schritte aufweist:

Verringern (106; 206) der Anzahl zulässiger elastischer Verkehrsströme, wenn ein Wert in Zusammenhang mit dem Durchsatz der elastischen Verkehrsströme niedriger ist als ein vorbestimmter Schwellenwert, der von der oder den Durchsatz-/Blockierungsauflagen gegeben wird, und
Steigern (107; 207) der Anzahl zulässiger elastischer Verkehrsströme, wenn der mit dem Durchsatz verbundene Wert größer ist als der Schwellenwert.

8. Verfahren nach Anspruch 4,
**dadurch gekennzeichnet, dass** der Schritt des Bestimmens der maximalen Anzahl zulässiger elastischer Verbindungen auf dem Minimieren der Blockierungswahrscheinlichkeit der angeforderten elastischen Verkehrsverbindungen in Bezug auf die Anzahl zulässiger elastischer Verkehrsverbindungen unter mindestens einer Durchsatz-Schwellenwertauflage für laufende elastische Verkehrsverbindungen beruht.

9. Verfahren nach Anspruch 8,
**dadurch gekennzeichnet, dass** das Minimieren der Blockierungswahrscheinlichkeit des elastischen Verkehrs unter mindestens einer Durchsatz-Schwellenwertauflage auch unter mindestens einer gegebenen Auflage auf einem Maximum zulässiger Blockierungswahrscheinlichkeit für elastischen Verkehr ausgeführt wird.

10. Verfahren nach Anspruch 4,
**dadurch gekennzeichnet, dass** der Schritt des Bestimmens der maximalen Anzahl zulässiger elastischer Verbindungen auf dem Maximieren des elastischen Verkehrsdurchsatzes in Bezug auf die Anzahl zulässiger elastischer Verkehrsverbindungen unter mindestens einer Blockierungswahrscheinlichkeitsauflage für angeforderte elastische Verkehrsverbindungen beruht.

11. Verfahren nach Anspruch 1,
**dadurch gekennzeichnet, dass** der elastische Verkehr eine Anzahl elastischer Verkehrsklassen umfasst, und dass der Schritt des Bestimmens mindestens eines Zulassungssteuerparameters den Schritt umfasst, bei dem für jede elastische Verkehrsklasse eine maximale Anzahl zulässiger elastischer Verkehrsströme basierend auf einer jeweiligen Durchsatz/Blockierungswahrscheinlichkeitsauflage, die der elastischen Verkehrsklasse auferlegt ist, bestimmt wird.

12. Verfahren nach Anspruch 11,
**dadurch gekennzeichnet, dass** das Verfahren ferner die folgenden Schritte aufweist:

Bestimmen der zugehörigen Verkehrsklasse für jede der angeforderten Verbindungen, und
Steuern des Zulassens jeder angeforderten Verbindung basierend auf der entsprechenden verkehrsklassenspezifischen maximalen Anzahl zulässiger elastischer Verbindungen.

13. Verfahren nach Anspruch 1,
**dadurch gekennzeichnet, dass** die Netzwerkverkehrseingangsparameter mindestens die Verbindungskapazität, mindestens eine Blockierungswahrscheinlichkeitsauflage für nicht elastischen Verkehr und mindestens eine Durchsatz-/Blockierungsauflage für elastischen Verkehr enthalten.

14. Verfahren nach Anspruch 1,
**dadurch gekennzeichnet, dass** die Netzwerkverkehrseingangsparameter ferner die Ankunfts- und Abgangsraten sowie Spitzenbandbreitenforderungen für nicht elastischen und elastischen Verkehr sowie eine Mindestbandbreitenforderung für elastischen Verkehr umfassen.

15. Verfahren nach Anspruch 1,
**dadurch gekennzeichnet, dass** der elastische Verkehr mindestens eines der folgenden Elemente umfasst:

adaptive elastische Verkehrsströme von Internetprotokoll (IP)-Netzwerken, nicht adaptive elastische Verkehrsströme von IP-Netzwerken und Available Bit Rate (ABR)-Ströme von ATM-Netzwerken.

16. Verfahren nach Anspruch 1, bei dem die Verbindungskapazität für die Verbindungsbandbreite repräsentativ ist, und der elastische Verkehr mindestens eine elastische Verkehrsklasse umfasst, und wobei der zweite dedizierte Teil ($C_{ELA}$; $C_{ABR}$) der Verbindungsbandbreite Verbindungen der elastischen Verkehrsklasse oder Verkehrsklassen auf der Grundlage der Nutzung der Verbindungsbandbreiten unter mindestens einer Durchsatz-/Blockierungsauflage, die den Verbindungen der einen oder mehreren elastischen Verkehrsklassen auferlegt ist, zugewiesen wird.

17. Verfahren nach Anspruch 16,
**dadurch gekennzeichnet, dass** das Verfahren ferner den Schritt des Bestimmens (103-108; 203-208) einer maximalen Anzahl ($N_{EL2}$, $N_{EL3}$; $N_{ABR}$) zulässiger elastischer Verkehrsverbindungen auf der Verbindung basierend auf einer oder mehreren Durchsatz-/Blockierungsauflagen umfasst,
wobei der Schritt des Zuweisens von Bandbreite zu Verbindungen der einen oder mehreren elastischen Verkehrsklassen auf der maximalen Anzahl zulässiger elastischer Verkehrsverbindungen beruht.

18. Verfahren nach Anspruch 17,
**dadurch gekennzeichnet, dass** der Schritt des Bestimmens einer maximalen Anzahl zulässiger elastischer Verkehrsverbindungen auf dem Minimieren der Blockierungswahrscheinlichkeit elastischer Verkehrsverbindungen in Bezug auf die Anzahl zulässiger elastischer Verkehrsverbindungen unter mindestens einer Durchsatz-Schwellenwertauflage für laufende elastische Verkehrsverbindungen beruht.

19. Verfahren nach Anspruch 17,
**dadurch gekennzeichnet, dass** der Schritt des Bestimmens einer maximalen Anzahl zulässiger elastischer Verkehrsverbindungen auf dem Maximieren des Durchsatzes laufender elastischer Verkehrsverbindungen in Bezug auf die Anzahl zulässiger elastischer Verkehrsverbindungen unter mindestens einer Blockierungswahrscheinlichkeitsauflage für angeforderte elastische Verkehrsverbindungen beruht.

**20.** Verfahren nach Anspruch 17,
**dadurch gekennzeichnet, dass** der Schritt des Bestimmens einer maximalen Anzahl zulässiger elastischer Verkehrsverbindungen die folgenden Schritte aufweist:

Bestimmen (103; 203) eines Anfangswerts der Anzahl zulässiger elastischer Verkehrsverbindungen auf der Verbindung,
iteratives Ausführen der folgenden Schritte:

i) Bestimmen (104; 204) von Durchsatz/Blockierungswahrscheinlichkeitsmessungen basierend auf dem anfänglichen/aktuellen Wert der Anzahl zulässiger elastischer Verkehrsverbindungen auf der Verbindung,
ii) Bewerten (105; 205) der einen oder mehreren Durchsatz-/Blockierungsauflagen, die dem elastischen Verkehr auferlegt sind, basierend auf den bestimmten Durchsatz-/Blockierungsmessungen, und
iii) Einstellen (106/107; 206/207) der Anzahl zulässiger elastischer Verkehrsverbindungen basierend auf der Bewertung, und

Beenden des Iterationsprozesses und Extrahieren (108; 208) der maximalen Anzahl zulässiger elastischer Verkehrsverbindungen, wenn sie die eine oder mehreren Auflagen im Wesentlichen erfüllen.

**21.** Verfahren nach Anspruch 1, das ferner folgende Schritte aufweist:

Bestimmen (103-108; 203-208) einer maximalen Anzahl ($NE_{L2}$, $N_{EL3}$; $N_{ABR}$) zulässiger elastischer Verkehrsverbindungen auf der Verbindung basierend auf den Netzwerkverkehrseingangsparametern, wobei die Eingangsparameter mindestens eine Durchsatz/Blockierungsauflage, die dem elastischen Verkehr auferlegt ist, umfassen,
Empfangen von Anfragen um elastische Verkehrsverbindungen auf der Verbindung in dem Netzwerk;
Durchführen der Zulassungssteuerung für die angeforderten elastischen Verkehrsverbindungen basierend auf der bestimmten maximalen Anzahl zulässiger elastischer Verkehrsverbindungen.

**22.** Verfahren nach Anspruch 1, wobei das Netzwerk ein Zulassungssteuer-aktiviertes IP-Netzwerk (10) ist, **dadurch gekennzeichnet, dass** das Verfahren die folgenden Schritte aufweist:

Anwenden (101-108) eines Verbindungsniveaumodells einer Verbindung, die mindestens eine nicht elastische Verkehrsklasse trägt und einer Anzahl n, wobei n eine Ganzzahl gleich oder größer als 1 ist, elastischer Verkehrsklassen zum Bemessen der gemeinsamen Nutzung von Verbindungsbandbreite für Durchsatz/Blockierungsoptimalität basierend auf der Aufteilung der Verbindungskapazität in einen ersten Teil ($C_{COM}$) gemeinsam für den elastischen Verkehr und den nicht elastischen Verkehr und einen zweiten Teil ($C_{ELA}$), der dem elastischen Verkehr zugewiesen ist, wobei das Verbindungsniveaumodell definiert wird **dadurch**:

dass die Verbindung eine vorbestimmte Bandbreitenkapazität C hat und
dass der elastische Verkehr für jede der n elastischen Verkehrsklassen modelliert wird als:

i) eine Spitzenbandbreitenanforderung und eine Mindestbandbreitenanforderung habend,
ii) die maximal mögliche Bandbreite innerhalb der Spitzen- und Mindestbandbreitenanforderungen belegend, und
iii) als mit mindestens einer minimalen akzeptierten Durchsatzwahrscheinlichkeit und einer maximalen akzeptierten Blockierungswahrscheinlichkeit verbunden.

**23.** Verfahren nach Anspruch 22,
**dadurch gekennzeichnet, dass** der elastische Verkehr für jede der n Verkehrsklassen ferner modelliert ist als:

iv) dynamisch ankommend gemäß einem Poisson-Prozess und mit einer Ankunftsrate sowie mit einer Abgangsrate verbunden,
v) anteilsmäßig gleich die verfügbare Bandbreite für die elastische Verkehrsklasse zwischen den elastischen Strömen gemeinsam nutzend, und
vi) als mit einer Mindesthaltezeit verbunden.

**24.** Verfahren nach Anspruch 22,
**dadurch gekennzeichnet, dass** die n elastischen Verkehrsklassen eine erste Verkehrsklasse für adaptive elastische Ströme und eine zweite Verkehrsklasse für nicht adaptive elastische Ströme aufweisen.

25. Verfahren nach Anspruch 1, das ferner den Schritt des Bestimmens einer stationären Leistungsverteilung von Markov-Kette aufweist, die die Dynamiken einer Netzwerkverbindung, die Verkehr einer Anzahl von Verkehrsklassen trägt, darunter eine nicht elastische Verkehrsklasse sowie eine nicht adaptive elastische Verkehrsklasse beschreibt durch:

Definieren einer Strategie zur gemeinsamen Nutzung von Verbindungskapazität für die Verbindung basierend auf der Aufteilung der Verbindungskapazität in einen ersten Teil ($C_{COM}$) zur gemeinsamen Nutzung für elastischen Verkehr und nicht elastischen Verkehr und einen zweiten Teil ($C_{ELA}$; $C_{ABR}$), der dem elastischen Verkehr zugewiesen ist,

Bestimmen einer multidimensionalen Markov-Kette, die einen Satz durchführbarer Zustände für die Anzahl aktiver Verbindungen der Verkehrsklassen gemäß Auflagen, die von der Strategie zur gemeinsamen Nutzung der Verbindung auferlegt werden, hat,

Berechnen einer anfänglichen Annäherung der stationären Leistungsverteilung der Markov-Kette basierend auf Markov-Kettenproduktformberechnungen, und

iteratives Bestimmen der stationären Leistungsverteilung ausgehend von der anfänglichen Annäherung der stationären Leistungsverteilung.

26. Verfahren nach Anspruch 25,
**dadurch gekennzeichnet, dass** der Schritt des Berechnens einer anfänglichen Annäherung der stationären Leistungsverteilung die folgenden Schritte aufweist:

Bestimmen der stationären Leistungsverteilung der anderen Verkehrsklassen als die nicht adaptive Verkehrsklasse, als gäbe es keinen nicht adaptiven Verkehr in dem System, und

Bestimmen der Zustandswahrscheinlichkeiten unter der Annahme des Gleichgewichts des eingehenden und ausgehenden Verkehrs einer der anderen Verkehrsklassen und der nicht adaptiven elastischen Verkehrsklasse.

27. Verfahren nach Anspruch 25,
**dadurch gekennzeichnet, dass** der Schritt des iterativen Bestimmens der stationären Leistungsverteilung auf einem Bikonjugierten-Gradienten-Verfahren beruht.

28. Verfahren nach Anspruch 25,
**dadurch gekennzeichnet, dass** die Blockierungswahrscheinlichkeiten für die Verkehrsklassen basierend auf einer stationären Leistungsverteilung berechnet werden, die sich aus der iterativen Bestimmung ergibt.

29. Vorrichtung zum gemeinsamen Nutzen von Verbindungskapazität in einem Netzwerk (10), wobei die Vorrichtung Mittel zum Empfangen von Netzwerkverkehrseingangsparametern hat,
**dadurch gekennzeichnet, dass** die Vorrichtung Folgendes aufweist:

Mittel (21; 21, 25) zum Aufteilen der Verbindungskapazität in einen ersten Teil, der für elastischen Verkehr und nicht elastischen Verkehr gemeinsam genutzt wird, und einen zweiten Teil, der für elastischen Verkehr bestimmt ist, basierend auf mindestens einem Teil der Netzwerkverkehrseingangsparameter, und

Mittel (21) zum Bestimmen mindestens eines Zulassungssteuerparameters für den elastischen Verkehr basierend auf der Aufteilung von Verbindungskapazität und mindestens einem Teil der Netzwerkverkehrseingangsparameter.

30. Vorrichtung nach Anspruch 29,
**dadurch gekennzeichnet, dass** die Vorrichtung ferner Mittel (22) zum Ausüben der Zulassungssteuerung für elastische Verkehrsströme basierend auf dem oder den bestimmten Zulassungssteuerparametern umfasst.

31. Vorrichtung nach Anspruch 29,
**dadurch gekennzeichnet, dass** die Aufteilmittel Mittel zum Bestimmen einer erforderten Mindestkapazität des gemeinsamen Teils in Bezug auf nicht elastischen Verkehr in Anbetracht mindestens einer maximalen zulässigen Blockierungswahrscheinlichkeit für nicht elastischen Verkehr umfasst.

32. Vorrichtung nach Anspruch 29,
**dadurch gekennzeichnet, dass** das Mittel zum Bestimmen mindestens eines Zulassungssteuerparameters Mittel zum Bestimmen einer maximalen Anzahl zulässiger elastischer Verkehrsströme basierend auf mindestens einer Durchsatz-/Blockierungsauflage, die dem elastischen Verkehr auferlegt ist, umfasst.

33. Vorrichtung nach Anspruch 32,
**dadurch gekennzeichnet, dass** das Mittel zum Bestimmen einer maximalen Anzahl zulässiger elastischer Verkehrsströme zu Folgendem konfiguriert ist:

anfänglich Bestimmen einer Anzahl zulässiger elastischer Verkehrsströme auf einer Verbindung in dem Netzwerk,
iteratives Bewerten der einen oder mehreren Durchsatz-/Blockierungsauflagen, die dem elastischen Verkehr auferlegt sind, basierend auf der aktuellen Anzahl zulässiger elastischer Verkehrsströme und Einstellen der Anzahl zulässiger elastischer Verkehrsströme basierend auf der Bewertung, und
Beenden des Iterationsprozesses und Extrahieren der maximalen Anzahl zulässiger elastischer Verkehrsströme beim Erfüllen der einen oder mehreren Auflagen.

34. Vorrichtung nach Anspruch 32,
**dadurch gekennzeichnet, dass** das Mittel zum Bestimmen einer maximalen Anzahl zulässiger elastischer Verkehrsströme konfiguriert ist, um die maximale Anzahl basierend auf dem Minimieren der Blockierungswahrscheinlichkeit angeforderter elastischer Verkehrsverbindungen in Bezug auf die maximale Anzahl zulässiger elastischer Verkehrsverbindungen unter mindestens einer Durchsatz-Schwellenwertauflage für laufende elastische Verkehrsverbindungen zu bestimmen.

35. Vorrichtung nach Anspruch 32,
**dadurch gekennzeichnet, dass** das Mittel zum Bestimmen einer maximalen Anzahl zulässiger elastischer Verkehrsströme konfiguriert ist, um die maximale Anzahl basierend auf dem Maximieren des elastischen Verkehrsdurchsatzes in Bezug auf die maximale Anzahl zulässiger elastischer Verkehrsverbindungen unter mindestens einer Blockierungswahrscheinlichkeitsauflage für elastischen Verkehr zu bestimmen.

36. Vorrichtung nach Anspruch 29,
**dadurch gekennzeichnet, dass** das Empfangsmittel Netzverkehrseingangsparameter empfängt, die die Verbindungskapazität, Ankunfts- und Abgangsraten, Spitzenbandbreitenforderungen für nicht elastischen sowie elastischen Verkehr, eine Mindestbandbreitenanforderung für elastischen Verkehr, mindestens eine Blockierungswahrscheinlichkeitsauflage für nicht elastischen Verkehr und mindestens eine Durchsatz-/Blockierungsauflage für elastischen Verkehr umfassen.

37. Vorrichtung nach Anspruch 29,
**dadurch gekennzeichnet, dass** der elastische Verkehr mindestens eines der folgenden Elemente aufweist:

adaptive elastische Verkehrsströme von Internetprotokoll (IP)-Netzwerken, nicht adaptive elastische Verkehrsströme von IP-Netzwerken und Available Bit Rate (ABR)-Ströme von ATM-Netzwerken.

38. Vorrichtung nach Anspruch 29, wobei die Verbindungskapazität für die Verbindungsbandbreite repräsentativ ist, und der elastische Verkehr mindestens eine elastische Verkehrsklasse umfasst, und wobei die Vorrichtung ferner einen Prozessor (21) aufweist, der konfiguriert ist, um den zweiten dedizierten Teil der Verbindungsbandbreite Verbindungen der einen oder mehreren elastischen. Verkehrsklassen basierend auf der Nutzung der Verbindungsbandbreite unter mindestens einer Durchsatz-/Blockierungsauflage, die den Verbindungen der einen oder mehreren elastischen Verkehrsklassen auferlegt ist, zuzuweisen.

39. Vorrichtung nach Anspruch 38,
**dadurch gekennzeichnet, dass** der Prozessor (21) konfiguriert ist, um eine erforderliche Mindestbandbreite des gemeinsam genutzten Teils'für Verbindungen nicht elastischer Verkehrsklassen mit mindestens einer maximalen zulässigen Blockierungswahrscheinlichkeit für nicht elastische Verkehrsverbindungen zuzuweisen.

40. Vorrichtung nach Anspruch 38,
**dadurch gekennzeichnet, dass** der Prozessor (21) ferner konfiguriert ist, um eine maximale Anzahl zulässiger elastischer Verkehrsverbindungen auf der Verbindung basierend auf der oder den Durchsatz-/Blockierungsauflagen zuzuweisen, und um den elastischen Verkehrsverbindungen basierend auf dem dedizierten Teil der Verbindungsbandbreite sowie der maximalen Anzahl zulässiger elastischer Verkehrsverbindungen Bandbreite zuzuweisen.

**41.** Vorrichtung nach Anspruch 40,
**dadurch gekennzeichnet, dass** der Prozessor (21) ferner konfiguriert ist, um die maximale Anzahl zulässiger elastischer Verbindungen basierend auf dem Minimieren der Blockierungswahrscheinlichkeit elastischer Verkehrsverbindungen in Bezug auf die Anzahl zulässiger elastischer Verkehrsverbindungen unter mindestens einer Durchsatz-Schwellenwertauflage'für laufende elastische Verkehrsverbindungen zu bestimmen.

**42.** Vorrichtung nach Anspruch 40,
**dadurch gekennzeichnet, dass** der Prozessor (21) ferner konfiguriert ist, um die maximale Anzahl zulässiger elastischer Verbindungen basierend auf dem Maximieren des Durchsatzes der elastischen Verkehrsverbindungen in Bezug auf die Anzahl zulässiger elastischer Verkehrsverbindungen unter mindestens einer Blockierungswahrscheinlichkeitsauflage für elastische Verkehrsverbindungen zu bestimmen.

**43.** Vorrichtung nach Anspruch 29,
**dadurch gekennzeichnet, dass** die Vorrichtung einen Prozessor (21) aufweist, der auf die Netzwerkverkehrseingangsparameter reagiert und zu Folgendem konfiguriert ist:

Bestimmen einer maximalen Anzahl zulässiger elastischer Verkehrsverbindungen basierend auf mindestens einer Durchsatz-/Blockierungsauflage, die dem elastischen Verkehr auferlegt ist,
Empfangen von Anfragen um elastische Verkehrsverbindungen, und
Ausüben der Zulassungssteuerung für die angeforderten elastischen Verkehrsverbindungen basierend auf der bestimmten maximalen Anzahl zulässiger elastischer Verkehrsströme.

**44.** Vorrichtung nach Anspruch 43,
**dadurch gekennzeichnet, dass** der Prozessor (21) ferner zum Bestimmen der maximalen Anzahl zulässiger elastischer Verbindungen basierend auf dem iterativen Verbessern der Nutzung der Verbindungsbandbreite unter der oder den Durchsatz-/Blockierungsauflagen konfiguriert ist.

## Revendications

**1.** Procédé destiné à partager une capacité de lien dans un réseau (10), dans lequel ledit procédé comporte l'étape de réception (101 ; 201) de paramètres d'entrée de trafic de réseau ; **caractérisé en ce que** ledit procédé comporte de plus les étapes :

de division de ladite capacité de lien en une première partie ($C_{COM}$) commune à un trafic élastique et à un trafic non élastique ainsi qu'en une deuxième partie ($C_{ELA}$ ; $C_{ABR}$) dédiée à un trafic élastique, sur la base d'au moins une partie desdits paramètres d'entrée de trafic de réseau ; et
de détermination (103-108 ; 203-208) d'au moins un paramètre de commande d'admission pour ledit trafic élastique sur la base de ladite division de capacité de lien et d'au moins une partie desdits paramètres d'entrée de trafic de réseau.

**2.** Procédé selon la revendication 1,
**caractérisé en ce que** ledit procédé comporte de plus l'étape consistant à exercer une commande d'admission pour des flux de trafic élastique sur la base dudit/desdits paramètre(s) de commande d'admission déterminé(s).

**3.** Procédé selon la revendication 1,
**caractérisé en ce que** ladite étape de division comporte l'étape de détermination (102 ; 202) d'une capacité nécessaire minimale de ladite partie commune concernant un trafic non élastique étant donné au moins une probabilité de blocage autorisée maximale pour ledit trafic non élastique.

**4.** Procédé selon la revendication 1,
**caractérisé en ce que** ladite étape de détermination d'au moins un paramètre de commande d'admission comporte l'étape de détermination d'un nombre ($N_{EL2}$, $N_{EL3}$, $N_{ABR}$) maximal de flux de trafic élastique acceptables sur la base d'au moins une contrainte au niveau de l'appel imposée sur ledit trafic élastique.

**5.** Procédé selon la revendication 4,
**caractérisé en ce que** ladite étape de détermination d'un nombre maximal de flux de trafic élastique acceptables est basée sur un modèle au niveau de l'appel pour le trafic élastique, et ladite/lesdites contrainte(s) au niveau de l'appel est/sont liée(s) à au moins l'une parmi une probabilité de débit et de blocage dudit trafic élastique.

6. Procédé selon la revendication 5,
   **caractérisé en ce que** ladite étape de détermination d'un nombre maximal de flux de trafic élastique acceptables comporte les étapes :

   de détermination (103 ; 203) d'une valeur initiale du nombre de flux de trafic élastique acceptables sur un lien dans ledit réseau ;
   de réalisation de façon itérative des étapes :

   i) d'évaluation (105 ; 205) de ladite/desdites contrainte(s) de débit/blocage imposée(s) sur ledit trafic élastique sur la base de la valeur initiale/courante du nombre de flux de trafic élastique acceptables ; et
   ii) d'ajustement dudit nombre de flux de trafic élastique acceptables sur la base de ladite évaluation ; et

   d'interruption dudit processus d'itération et d'extraction (108 ; 208) dudit nombre maximal de flux de trafic élastique acceptables lorsque ladite/lesdites contrainte(s) est/sont satisfaite(s).

7. Procédé selon la revendication 6,
   **caractérisé en ce que** ladite étape d'ajustement dudit nombre de flux de trafic élastique acceptables sur la base de ladite évaluation comporte les étapes :

   de réduction (106 ; 206) dudit nombre de flux de trafic élastique acceptables si une valeur liée au débit desdits flux de trafic élastique est inférieure à un seuil prédéterminé donné par ladite/lesdites contrainte(s) de débit/blocage ; et
   d'augmentation (107 ; 207) dudit nombre de flux de trafic élastique acceptables si ladite valeur liée au débit est plus élevée que le seuil.

8. Procédé selon la revendication 4,
   **caractérisé en ce que** ladite étape de détermination dudit nombre maximal de liaisons élastiques acceptables est basée sur une minimisation de la probabilité de blocage de liaisons de trafic élastique demandées par rapport au nombre de liaisons de trafic élastique acceptables sous au moins une contrainte de débit-seuil pour des liaisons de trafic élastique en cours.

9. Procédé selon la revendication 8,
   **caractérisé en ce que** ladite minimisation de la probabilité de blocage de trafic élastique sous au moins une contrainte de débit-seuil est effectuée également sous au moins une contrainte donnée sur une probabilité de blocage autorisée maximale pour un trafic élastique.

10. Procédé selon la revendication 4,
    **caractérisé en ce que** ladite étape de détermination dudit nombre maximal de liaisons élastiques acceptables est basée sur une maximisation du débit de trafic élastique par rapport au nombre de liaisons de trafic élastique acceptables sous au moins une contrainte de probabilité de blocage pour des liaisons de trafic élastique demandées.

11. Procédé selon la revendication 1,
    **caractérisé en ce que** ledit trafic élastique comporte un certain nombre de classes de trafic élastique, et ladite étape de détermination d'au moins un paramètre de commande d'admission comporte l'étape de détermination, pour chacune desdites classes de trafic élastique, d'un nombre maximal de flux de trafic élastique acceptables sur la base d'une contrainte de probabilité de débit/blocage respective imposée sur la classe de trafic élastique.

12. Procédé selon la revendication 11,
    **caractérisé en ce que** ledit procédé comporte de plus les étapes :

    de détermination de la classe de trafic associée pour chacune desdites liaisons demandées ; et
    de commande d'admission de chaque liaison demandée sur la base du nombre maximal spécifique de classe de trafic correspondant de liaisons élastiques acceptables.

13. Procédé selon la revendication 1,
    **caractérisé en ce que** lesdits paramètres d'entrée de trafic de réseau comportent au moins ladite capacité de lien, au moins une contrainte de probabilité de blocage pour un trafic non élastique et au moins une contrainte de débit/blocage pour un trafic élastique.

14. Procédé selon la revendication 1,
   **caractérisé en ce que** lesdits paramètres d'entrée de trafic de réseau comportent de plus des vitesses d'arrivée et de départ ainsi que des conditions requises de bande passante de crête pour un trafic non élastique et élastique, et une condition requise de bande passante minimale pour un trafic élastique.

15. Procédé selon la revendication 1,
   **caractérisé en ce que** ledit trafic élastique comporte au moins l'un de ce qui suit : des flux de trafic élastique adaptatifs de réseaux de protocole Internet (IP), des flux de trafic élastique non adaptatifs de réseaux IP et des flux de débit binaire disponible (ABR pour "Available Bit Rate") de réseaux ATM.

16. Procédé selon la revendication 1, dans lequel ladite capacité de lien est représentative de la bande passante de lien, et ledit trafic élastique comporte au moins une classe de trafic élastique, et ladite deuxième partie ($C_{ELA}$ ; $C_{ABR}$) dédiée de ladite bande passante de lien est assignée à des liaisons de ladite/desdites classe(s) de trafic élastique sur la base d'une utilisation de bande passante de lien sous au moins une contrainte de débit/blocage imposée sur les liaisons de ladite/desdites classe(s) de trafic élastique.

17. Procédé selon la revendication 16,
   **caractérisé en ce que** ledit procédé comporte de plus l'étape de détermination (103-108 ; 203-208) d'un nombre ($N_{EL2}$, $N_{EL3}$ ; $N_{ABR}$) maximal de liaisons de trafic élastique acceptables sur le lien sur la base de ladite/desdites contrainte(s) de débit/blocage,
   dans lequel ladite étape d'assignation d'une bande passante à des liaisons de ladite/desdites classe(s) de trafic élastique est basée sur ledit nombre maximal de liaisons de trafic élastique acceptables.

18. Procédé selon la revendication 17,
   **caractérisé en ce que** ladite étape de détermination d'un nombre maximal de liaisons de trafic élastique acceptables est basée sur une minimisation de la probabilité de blocage de liaisons de trafic élastique par rapport au nombre de liaisons de trafic élastique acceptables sous au moins une contrainte de débit-seuil pour des liaisons de trafic élastique en cours.

19. Procédé selon la revendication 17,
   **caractérisé en ce que** ladite étape de détermination d'un nombre maximal de liaisons de trafic élastique acceptables est basée sur une maximisation du débit de liaisons de trafic élastique en cours par rapport au nombre de liaisons de trafic élastique acceptables sous au moins une contrainte de probabilité de blocage pour des liaisons de trafic élastique demandées.

20. Procédé selon la revendication 17,
   **caractérisé en ce que** ladite étape de détermination d'un nombre maximal de liaisons de trafic élastique acceptables comporte les étapes :

   de détermination (103 ; 203) d'une valeur initiale du nombre de liaisons de trafic élastique acceptables sur ledit lien ;
   de réalisation de façon itérative des étapes :

      i) de détermination (104 ; 204) de mesures de probabilité de débit/blocage sur la base initiale/courante du nombre de liaisons de trafic élastique acceptables sur ledit lien ;
      ii) d'évaluation (105 ; 205) de ladite/desdites contrainte(s) de débit/blocage imposée(s) sur ledit trafic élastique sur la base des mesures de débit/blocage déterminées ; et
      iii) d'ajustement (106/107 ; 206/207) dudit nombre de liaisons de trafic élastique acceptables sur la base de ladite évaluation ; et

   d'interruption dudit processus d'itération et d'extraction (108 ; 208) dudit nombre maximal de liaisons de trafic élastique acceptables en satisfaisant substantiellement à ladite/auxdites contrainte(s).

21. Procédé selon la revendication 1, comprenant de plus les étapes :

de détermination (103-108 ; 203-208) d'un nombre ($N_{EL2}$, $N_{EL3}$, $N_{ABR}$) maximal de liaisons de trafic élastique acceptables sur ledit lien sur la base desdits paramètres d'entrée de trafic de réseau, lesdits paramètres d'entrée comportant au moins une contrainte de débit/blocage imposée sur ledit trafic élastique ;

de réception de requêtes pour des liaisons de trafic élastique sur ledit lien dans ledit réseau ;

d'application d'une commande d'admission pour lesdites liaisons de trafic élastique demandées sur la base dudit nombre maximal déterminé de liaisons de trafic élastique acceptables.

**22.** Procédé selon la revendication 1, dans lequel ledit réseau est un réseau (10) IP activé en commande d'admission, **caractérisé en ce que** ledit procédé comporte l'étape :

d'application (101-108) d'un modèle au niveau de l'appel d'un lien portant au moins une classe de trafic non élastique et un nombre *n*, où *n* est un entier égal ou supérieur à 1, de classes de trafic élastique, pour dimensionner le partage de bande passante de lien pour une optimalité de débit-blocage sur la base de ladite division de la capacité de lien dans une première partie ($C_{COM}$) commune à un trafic élastique et à un trafic non élastique et une deuxième partie (CELA) dédiée à un trafic élastique, où ledit modèle au niveau de l'appel est défini par :

ledit lien ayant une capacité C de bande passante prédéterminée ; et
pour chacune desdites n classes de trafic élastique, le trafic élastique étant modélisé comme :

i) ayant une condition requise de bande passante de crête et une condition requise de bande passante minimale ;
ii) occupant la bande passante possible maximale dans lesdites conditions requises de bande passante de crête et minimale ; et
iii) étant associé à au moins une parmi une probabilité de débit admise minimale et une probabilité de blocage admise maximale.

**23.** Procédé selon la revendication 22,
**caractérisé en ce que**, pour chacune desdites n classes de trafic, le trafic élastique est modélisé de plus comme :

iv) arrivant dynamiquement selon un processus de Poisson et étant associé à une vitesse d'arrivée ainsi qu'à une vitesse de départ ;
v) partageant proportionnellement de façon égale la bande passante disponible pour la classe de trafic élastique parmi les flux élastiques ; et
vi) étant associé à un temps de maintien minimal.

**24.** Procédé selon la revendication 22,
**caractérisé en ce que** lesdites n classes de trafic élastique comportent une première classe de trafic pour des flux élastiques adaptatifs, et une deuxième classe de trafic pour des flux élastiques non adaptatifs.

**25.** Procédé selon la revendication 1, comprenant de plus l'étape de détermination d'une distribution en état stationnaire d'une chaîne de Markov décrivant la dynamique d'un lien de réseau portant un trafic d'un certain nombre de classes de trafic incluant une classe de trafic non élastique ainsi qu'une classe de trafic élastique non adaptatif par :

la définition d'une stratégie de partage de capacité de lien pour ledit lien sur la base de ladite division de la capacité de lien dans une première partie ($C_{COM}$) commune au trafic élastique et au trafic non élastique et une deuxième partie ($C_{ELA}$ ; $C_{ABR}$) dédiée à un trafic élastique ;
la détermination d'une chaîne de Markov multidimensionnelle ayant un ensemble d'états réalisables pour le nombre de liaisons actives desdites classes de trafic selon des contraintes imposées par ladite stratégie de partage de lien ;
le calcul d'une approximation initiale de la distribution en état stationnaire de ladite chaîne de Markov sur la base de calculs de forme de produit de chaîne de Markov ; et
la détermination de façon itérative de la distribution en état stationnaire démarrant à partir de ladite approximation initiale de la distribution en état stationnaire.

**26.** Procédé selon la revendication 25,
**caractérisé en ce que** ladite étape de calcul d'une approximation initiale de la distribution en état stationnaire comporte les étapes :

de détermination de la distribution en état stationnaire de classes de trafic autres que ladite classe de trafic non adaptatif comme s'il n'y avait aucun trafic élastique non adaptatif dans le système ; et

de détermination de probabilités d'état supposant un équilibre du trafic entrant et sortant de l'une desdites autres classes de trafic et de ladite classe de trafic élastique non adaptatif.

27. Procédé selon la revendication 25,
**caractérisé en ce que** ladite étape de détermination de façon itérative de la distribution en état stationnaire est basée sur une méthode du gradient biconjugué.

28. Procédé selon la revendication 25,
**caractérisé en ce que** des probabilités de blocage pour lesdites classes de trafic sont calculées en se basant sur une distribution en état stationnaire résultant de ladite détermination itérative.

29. Dispositif destiné à partager la capacité de lien dans un réseau (10), ledit dispositif ayant un moyen destiné à recevoir des paramètres d'entrée de trafic de réseau,
**caractérisé en ce que** ledit dispositif comporte :

un moyen (21 ; 21, 25) destiné à diviser ladite capacité de lien en une première partie commune à un trafic élastique et un trafic non élastique et en une deuxième partie dédiée à un trafic élastique, sur la base d'au moins une partie desdits paramètres d'entrée de trafic de réseau ; et
un moyen (21) déterminant au moins un paramètre de commande d'admission pour ledit trafic élastique sur la base de ladite division de capacité de lien et au moins une partie desdits paramètres d'entrée de trafic de réseau.

30. Dispositif selon la revendication 29,
**caractérisé en ce que** ledit dispositif comporte de plus un moyen (22) destiné à exercer une commande d'admission pour des flux de trafic élastique sur la base dudit/desdits paramètre(s) de commande d'admission déterminé(s).

31. Dispositif selon la revendication 29,
**caractérisé en ce que** ledit moyen de division comporte un moyen destiné à déterminer une capacité nécessaire minimale de ladite partie commune concernant un trafic non élastique étant donné au moins une probabilité de blocage autorisée maximale pour ledit trafic non élastique.

32. Dispositif selon la revendication 29,
**caractérisé en ce que** ledit moyen destiné à déterminer au moins un paramètre de commande d'admission comporte un moyen destiné à déterminer un nombre maximal de flux de trafic élastique acceptables sur la base d'au moins une contrainte de débit/blocage imposée sur ledit trafic élastique.

33. Dispositif selon la revendication 32,
**caractérisé en ce que** ledit moyen destiné à déterminer un nombre maximal de flux de trafic élastique acceptables est configuré pour :

déterminer initialement un certain nombre de flux de trafic élastique acceptables sur un lien dans ledit réseau ;
évaluer de façon itérative ladite/lesdites contrainte(s) de débit/blocage imposée(s) sur ledit trafic élastique sur la base du nombre courant de flux de trafic élastique acceptables et ajuster ledit nombre de flux de trafic élastique acceptables sur la base de ladite évaluation ; et
mettre fin audit processus d'itération et extraire ledit nombre maximal de flux de trafic élastique acceptables en satisfaisant à ladite/auxdites contrainte(s).

34. Dispositif selon la revendication 32,
**caractérisé en ce que** ledit moyen destiné à déterminer un nombre maximal de flux de trafic élastique acceptables est configuré pour déterminer ledit nombre maximal sur la base d'une minimisation de la probabilité de blocage de liaisons de trafic élastique demandées par rapport audit nombre maximal de liaisons de trafic élastique acceptables sous au moins une contrainte de débit-seuil pour des liaisons de trafic élastique en cours.

35. Dispositif selon la revendication 32,
**caractérisé en ce que** ledit moyen destiné à déterminer un nombre maximal de flux de trafic élastique acceptables est configuré pour déterminer ledit nombre maximal sur la base d'une maximisation d'un débit de trafic élastique par rapport audit nombre maximal de liaisons de trafic élastique acceptables sous au moins une contrainte de probabilité de blocage pour un trafic élastique.

**36.** Dispositif selon la revendication 29,
**caractérisé en ce que** ledit moyen de réception reçoit des paramètres d'entrée de trafic de réseau incluant ladite capacité de lien, les vitesses d'arrivée et de départ et les conditions requises de bande passante de crête pour un trafic élastique ainsi qu'un trafic non élastique, une condition requise de bande passante minimale pour un trafic élastique, au moins une contrainte de probabilité de blocage pour un trafic non élastique, et au moins une contrainte de débit/blocage pour un trafic élastique.

**37.** Dispositif selon la revendication 29,
**caractérisé en ce que** ledit trafic élastique comporte au moins l'un de ce qui suit : des flux de trafic élastique adaptatifs de réseaux de protocole Internet (IP), des flux de trafic élastique non adaptatifs de réseaux IP, et des flux de débit binaire disponible (ABR) de réseaux ATM.

**38.** Dispositif selon la revendication 29, dans lequel ladite capacité de lien est représentative de la bande passante de lien, et ledit trafic élastique comporte au moins une classe de trafic élastique, et ledit dispositif comporte en outre un processeur (21) configuré pour assigner ladite deuxième partie dédiée de ladite bande passante de lien à des liaisons de ladite/desdites classe(s) de trafic élastique sur la base d'une utilisation de bande passante de lien sous au moins une contrainte de débit/blocage imposée sur les liaisons de ladite/desdites classe(s) de trafic élastique.

**39.** Dispositif selon la revendication 38,
**caractérisé en ce que** ledit processeur (21) est configuré pour assigner une bande passante nécessaire minimale de ladite partie commune à des liaisons de classes de trafic non élastique étant donné au moins une probabilité de blocage autorisée maximale pour lesdites liaisons de trafic non élastique.

**40.** Dispositif selon la revendication 38,
**caractérisé en ce que** ledit processeur (21) est de plus configuré pour déterminer un nombre maximal de liaisons de trafic élastique acceptables sur le lien sur la base de ladite/desdites contrainte(s) de débit/blocage, et pour assigner une bande passante auxdites liaisons de trafic élastique sur la base de ladite partie dédiée de la bande passante de lien ainsi que ledit nombre maximal de liaisons de trafic élastique acceptables.

**41.** Dispositif selon la revendication 40,
**caractérisé en ce que** ledit processeur (21) est de plus configuré pour déterminer ledit nombre maximal de liaisons élastiques acceptables sur la base d'une minimisation de la probabilité de blocage de liaisons de trafic élastique par rapport au nombre de liaisons de trafic élastique acceptables sous au moins une contrainte de débit-seuil pour des liaisons de trafic élastique en cours.

**42.** Dispositif selon la revendication 40,
**caractérisé en ce que** ledit processeur (21) est de plus configuré pour déterminer ledit nombre maximal de liaisons élastiques acceptables sur la base d'une maximisation du débit de liaisons de trafic élastique par rapport au nombre de liaisons de trafic élastique acceptables sous au moins une contrainte de probabilité de blocage pour des liaisons de trafic élastique.

**43.** Dispositif selon la revendication 29,
**caractérisé en ce que** ledit dispositif comporte un processeur (21) réagissant auxdits paramètres d'entrée de trafic de réseau et configuré pour :

déterminer un nombre maximal de liaisons de trafic élastique acceptables sur la base d'au moins une contrainte de débit/blocage imposée sur ledit trafic élastique ;
recevoir des requêtes pour des liaisons de trafic élastique ; et
exercer une commande d'admission pour lesdites liaisons de trafic élastique demandées sur la base dudit nombre maximal déterminé de flux de trafic élastique acceptables.

**44.** Dispositif selon la revendication 43,
**caractérisé en ce que** ledit processeur (21) est de plus configuré pour déterminer ledit nombre maximal de liaisons élastiques acceptables sur la base d'une amélioration de façon itérative d'une utilisation de bande passante de lien sous ladite/lesdites contrainte(s) de débit/blocage.

Fig. 1

EP 1 232 609 B1

Fig. 2

Fig. 3

20

INPUT LINK          OUTPUT LINK

21

CONTROL UNIT:
C_ELA, C_COM,
N_ELA, N_COM

22

N_COM
IP PACKETS OF
RIGID FLOWS

23

N_ELA

25

C_COM

C
A
C

IP PACKETS OF
ELASTIC FLOWS

24

C_ELA

43

Fig. 4

Fig. 5

Fig. 6

EP 1 232 609 B1

INPUT
PARAMETERS — 201

DETERMINE
MIN {$C_{COM}$ : RIGID BLOCKING CONSTRAINTS} — 202

ESTIMATE INITIAL
CUT-OFF PARAMETER
$N_{ABR}$
FOR ABR TRAFFIC — 203

REDUCE
$N_{ABR}$ — 206

ANALYZE
ABR THROUGHPUT — 204

INCREASE
$N_{ABR}$ — 207

$\theta$ TOO
LOW

CHECK
CONSTRAINTS — 205

$\theta$ TOO
HIGH

PRODUCE
OUTPUT
PARAMETERS — 208

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5274644 A

**Non-patent literature cited in the description**

• **L. MASSOULIE ; J. ROBERTS.** Bandwidth Sharing : Objectives and Algorithms. *IEEE Infocom '99,* 1395-1403
• **L. MASSOULIE ; J. ROBERTS.** Bandwidth Sharing and Admission Control for Elastic Traffic. *ITC Specialist Seminar, Yokohama,* October 1998
• **L. MASSOULIE ; J. ROBERTS.** Arguments in Favour of Admission Control for TCP Flows. *16th International Teletraffic Congress, Edinburgh, UK,* June 1999
• **R.J. GIBBENS ; F.P. KELLY.** Distributed Connection Acceptance Control for a Connectionless Network. *16th International Teletraffic Congress, Edinburgh, UK,* June 1999
• **F. P. KELLY.** Charging and Rate Control for Elastic Traffic. *European Transaction on Telecommunications,* 1997, vol. 8, 33-37
• **WU-CHANG FENG ; DILIP D. KANDLUR ; DEBANJAN SAHA ; KANG. G. SHIN.** Understanding and Improving TCP Performance Over Networks with Minimum Rate Guarantees. *IEEE/ACM Transactions on Networking,* April 1999, vol. 7 (2), 173-187

• **E. D. SYKAS ; K. M. VLAKOS ; I. S. VENIERIS ; E. N. PROTONOTARIOS.** Simulative Analysis of Optimal Resource Allocation and Routing in IBCN's. *IEEE J-SAC,* 1991, vol. 9 (3
• **KEITH W. ROSS.** Multi-service Loss Models for Broadband Telecommunication Networks. Springer-Verlag, 1995
• **W. J. STEWART.** Introduction to the Numerical Solution of Markov Chains. Princeton University Press, 220-221
• **M. FRONTINI ; A. TAGLIANI.** Entropy-convergence in Stieltjes and Hamburger moment problem. *Appl. Math. and Comp.,* 1997, vol. 88, 39-51
• **M. TELEK ; S.RÁCZ.** Numerical analysis of large Markov reward models. *Performance Evaluation,* August 1999, vol. 36&37, 95-114
• **A. SMITH ; J. ADAMS ; G. TAGG.** Available Bit Rate - A New Service for ATM. *Computer Networks and ISDN Systems,* 1996, vol. 28, 635-640